# EUROPEAN PATENT SPECIFICATION

(11) **EP 3 105 634 B1**
(45) Date of publication and mention of the grant of the patent: **30.07.2025**
(21) Application number: 15745894.4
(22) Date of filing: 10.02.2015
(51) Int. Cl.: G02C 7/02, G02B 3/00, G02C 7/06, G02B 3/10, G02C 7/14

(54) **QUASI PROGRESSIVE LENSES FOR EYEWEAR**
QUASI-PROGRESSIVE LINSEN FÜR BRILLEN
VERRES QUASI-PROGRESSIFS POUR ARTICLE DE LUNETTERIE

(30) Priority: 10.02.2014 US 201461938029 P; 27.03.2014 US 201461971469 P; 09.05.2014 US 201461991420 P; 09.05.2014 US 201414274637
(43) Date of publication of application: 21.12.2016
(73) Proprietor: Shamir Optical Industry Ltd, 12135 Kibbutz Shamir (IL)
(72) Inventor: GIL, Yotam, 12135 Kibbutz Shamir (IL); GLESER, Liron, 12135 Kibbutz Shamir (IL); CARMON, Yuval, 12135 Kibbutz Shamir (IL); SHUR, Alex, 12135 Kibutz Shamir (IL)
(74) Representative: Durán-Corretjer, S.L.P.
(86) International application number: PCT/US2015/015224
(87) International publication number: WO 2015/120456

(56) References cited:
- WO-A1-96/12984
- WO-A2-2008/121975
- CN-A- 101 952 767
- CN-A- 102 902 078
- US-A- 5 042 936
- US-A- 5 812 238
- US-A- 6 155 681
- US-A1- 2006 050 236
- US-A1- 2006 050 236
- US-A1- 2008 218 689
- US-A1- 2012 038 882
- US-A1- 2013 114 040
- SHAMIR: "Shamir Autograph FreeFrame(TM)", 7 December 2012 (2012-12-07), XP055413691, Retrieved from the Internet <URL:https://web.archive.org/web/20121207083021/http://www.shamir.com:80/home-2/company-profile-3/item/690-shamir-autograph-freeframe(TM)> [retrieved on 20171009]

## Description

### BACKGROUND OF THE INVENTION

### Field of the Invention

This description relates generally to ophthalmic lenses used in eyewear that provide near vision as well as distance vision correction as well as lenses that provide prismatic correction.

### Description of the Related Art

Refractive errors are the most frequent eye problems encountered by patients of all ages. Refractive errors include (i) myopia or near-sightedness, a condition in which objects at a far distance (e.g., at a distance greater than 6.1 m (20 feet) appear blurred; (ii) hyperopia or farsightedness in which in which objects at a near distance (e.g., at a distance less than 0.61 m (2 feet)) appear blurred; (iii) astigmatism in which objects at near distance, far distance as well as intermediate distance appear blurred; and (iv) presbyopia that includes loss of the ability of the eye to focus on near objects. These and other refractive errors can be corrected, for example, by ophthalmic lenses such as those used in eyeglasses.

Patients suffering from hyperopia that also suffer from presbyopia or may require a first pair of ophthalmic lenses that provide distance vision and a second pair of ophthalmic lenses that provide near vision. Bifocal lenses can correct both near and far vision with the same lens and eliminate the need for separate pairs of ophthalmic lenses for viewing objects at near and far distances. Presbyopic patients can also benefit from progressive lenses that can correct near, intermediate and far vision. US Patent No. 6,155,681 discloses an ophthalmic lens comprising a far optical zone capable of providing far vision, a near optical zone capable of providing near vision; an a corridor connecting the far optical zone and the near optical zone, the corridor allowing a continuous transition of the lens power from the far optical zone to the near optical zone.

Related ophthalmic lenses are known from US 6 155 681 A (KRIS DIMITRIOS JACK) 5 December 2000, US 5 812 238 A (AHSBAHS FRANÇOISE) 22 September 1998, US 2006/050236 A1 (MENEZES EDGAR V) 9 March 2006, CN 102 902 078 A (OPHTHALMOLOGY AND OPTOMETRY INST WENZHOU MEDICAL COLLEGE; WENZHOU EXVI) 30 January 2013, WO 96/12984 A1 (SOLA INT HOLDINGS; EDWARDS SIMON JOHN; BARKAN ERIC; SKL) 2 May 1996, US 5 042 936 A (GUILINO GUENTHER) 27 August 1991 and Shamir: "Shamir Autograph FreeFrame(TM)", 7 December 2012.

### SUMMARY OF THE INVENTION

Bifocal lenses can correct both far and near vision with the same lens. Bifocal lenses include a first optical zone that provides correction for far or distance vision and a second optical zone that provides correction for near vision. The second zone is usually disposed more nasally in the lower portion of the lens. Bifocal lenses available in the market today have several disadvantages. For example, as the patient's gaze moves from far vision to near vision, a patient can experience loss of image and abrupt jump in the image. Moreover, the transition between the first and second optical zones of available bifocal lenses can have unwanted aberrations that can reduce visual quality and cause vision discomfort. In addition, in many available bifocal lenses, the first and second optical zones may be separated by a visible dividing line, which may be aesthetically unappealing. Furthermore, while bifocal lenses may be able to correct distant and near vision, they may be unable to provide good quality vision at intermediate distances. Progressive lenses can overcome some of the disadvantages of bifocal lenses. For example, many available progressive lenses include a corridor between the first optical zone that provides far or distance vision and the second optical zone that provides near vision. The optical power in the corridor can gradually increase as the gaze moves from far vision to near vision such that objects at intermediate distances between far and near distance can be viewed comfortably through the corridor. However, in some implementations of progressive lenses, the second optical zone providing near vision may occupy a smaller portion of the total area of the lens, which can result in degrading the visual experience associated with viewing objects located at near distances. In some implementations of progressive lenses, the corridor can be long and/or wide. In various embodiments, elongating the corridor may lead to reduced residual cylinder power or aberrations in the first optical zone, the second optical zone and/or in the peripheral zone, while widening the corridor can lead to a strengthening of residual cylinder power or aberrations in these areas. Additionally, in implementations of progressive lenses having long corridors, the patient may have to lower the gaze to such an extent that may be uncomfortable for use when transitioning from far vision state to near vision state and vice-versa.

Nevertheless, various lens embodiments described herein provide an ophthalmic solution that offers the user improved vision at near and far distances while increasing the portion of the total area occupied by the first and second optical zones providing far and near vision. Such lenses can also reduce visual distortions when the patient's gaze transitions from far vision to near vision in comparison to bifocals such as blended bifocals. The embodiments disclosed herein include a quasi progressive ophthalmic solution (such as, for example, lens blanks, eyeglass lenses, and glasses for eyewear) that include a short and a narrow transition zone between the first and second optical zones that provide near and distance vision. As a result of the reduction in the width and/or length of the transition zone, the percentage of the total area occupied by the first and the second optical zones providing far and particularly near vision can increase as compared to progressive lenses. Another consequence of reducing the width and/or length of the transition zone is a decrease in the residual cylinder power in the first and the second optical zones and/or the peripheral zones such that the visual quality at far and near distances is increased over the visual quality provided by available progressive lenses. Various embodiments described herein provide a lens having a residual cylinder power, power gradient and/or vertical prism gradient along the convergence path that is significantly lower than available bifocal lenses. Yet another advantage of reducing the length of the transition zone is that a patient can transition from far vision to near vision and vice versa with less movement of the gaze as compared to progressive lenses. In various implementations of the quasi progressive ophthalmic solution, the transition zone can have large optical power gradient such that objects at intermediate distances cannot be viewed or gazed comfortably through the transition zone. In various implementations of the quasi progressive ophthalmic solution, the transition zone can be optically non-functional such that objects at intermediate distances appear blurred, distorted and/or unclear. In some instances, objects at intermediate distances cannot be resolved when viewed through the optically non-functional transition zone.

The invention is as defined in claim 1, namely an ophthalmic lens comprising a far optical zone capable of providing far vision, a horizontal width of the far optical zone measured across the widest portion of the far optical zone being between 30 mm and 70 mm, the far zone having a residual cylinder power less than 0.25 Diopter; a near optical zone capable of providing near vision wherein the near optical zone has a centroid of the area in the near optical zone in which an addition power is not less than a maximum addition power minus 0.25 Diopter and wherein a horizontal width through the centroid of the near optical zone where the addition power is not less than the maximum addition value minus 0.25 Diopter is between 12 mm and 24 mm; and a corridor connecting the far optical zone and the near optical zone, the corridor including an area having a residual cylinder power or aberrations less than or equal to 0.5 Diopter, two peripheral zones disposed on either side of the corridor, wherein a length of the corridor measured between a first point proximal to the far optical zone and a second point proximal to the near optical zone is between 4 mm and 8 mm, wherein the first point has an addition power of 0.1 Diopter, and wherein the second point has an addition power equal to a maximum addition power minus 0.1 Diopter, wherein the peripheral zones have a residual cylinder power that is greater than 2.0 Diopter.

Another innovative aspect of the subject matter described in this disclosure can be implemented in an ophthalmic lens comprising a far optical zone capable of providing far vision, a near optical zone capable of providing near vision and a corridor connecting the far optical zone and the near optical zone.

Yet another innovative aspect of the subject matter described in this disclosure can be implemented in an ophthalmic lens comprising a far optical zone capable of providing far vision, a near optical zone capable of providing near vision and a transition zone connecting the far optical zone and the near optical zone. The transition zone has a power gradient extending from the far optical zone to the near optical zone with lower power closer to the far optical zone and higher power closer to the near optical zone. The power gradient can have a value between about 0.05 D/mm and about 1.25 D/mm.

One innovative aspect of the subject matter described in this disclosure can be implemented in an ophthalmic lens comprising a far optical zone capable of providing far vision, a near optical zone capable of providing near vision, said near optical zone for providing an addition between 1.75 D and 4 D and a transition zone connecting the far optical zone and the near optical zone.

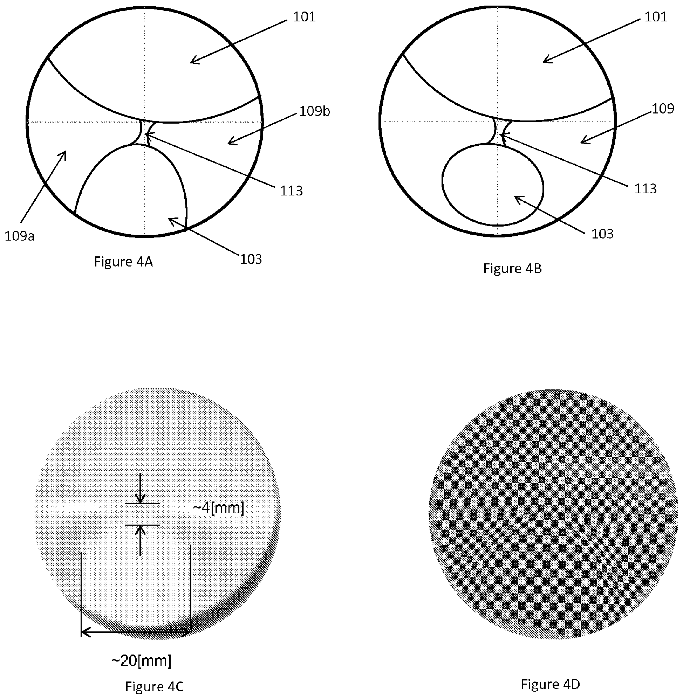

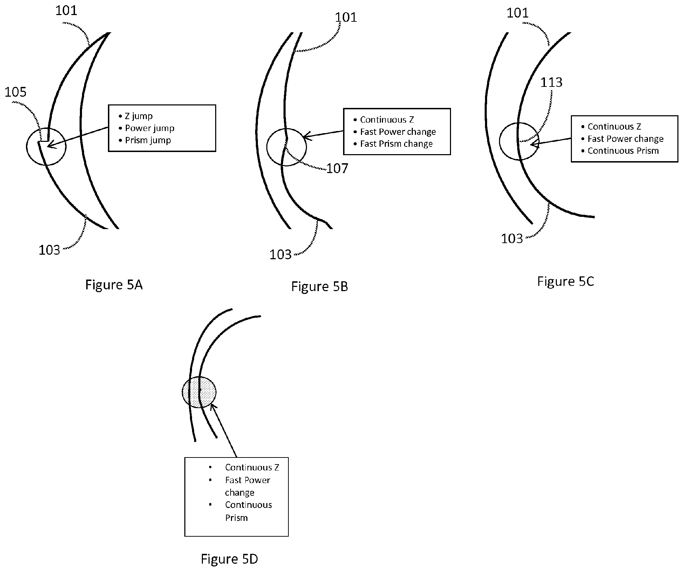

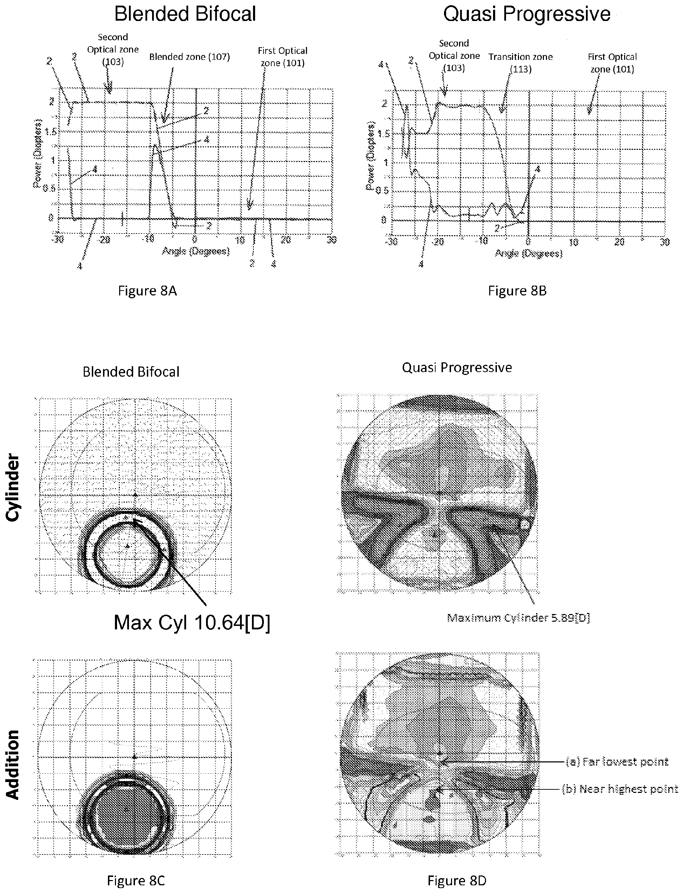

The lenses described in this disclosure introduce a quasi-bifocal or quasi-progressive lens design (Figures 4A, 4B, 7C and 7D). The quasi-bifocal or quasi-progressive lens design combines bifocal design characteristics along with some progressive design characteristics both on a single smooth lens surface, back or front (with no geometric singularities such as a singular point or line in the transition between far and near zones). Therefore, it can be manufactured by a freeform technology. The quasi bifocal or quasi-progressive lens is designed to overcome the disadvantages of the flat top and blended bifocals and give an aesthetically pleasing solution for the bifocal wearer (Figures 5A - 5D, 8A - 8D). It provides a larger and cleaner (with less cylindrical aberrations) far zone and larger and cleaner (with less cylindrical aberrations) near zone, in comparison to progressive designs. The quasi bifocal or quasi-progressive lens has four regions: a far vision zone, a near vision zone (near segment, reading zone), a transition zone (corridor), and at least one periphery zone (Figures 4A, 4B). The design has a clean far and a clean near vision zones and a short and narrow transition zone. The transition zone is defined along the convergence path from the vertically lowest point below the fitting point were the addition is still zero (point (a) of Figure 8D) to a point along the convergence path in the near vision zone where a full addition is reached (point (b) of Figure 8D). The short transition zone allows a smooth transition, with less distortion, from the far to the near zones and vice versa with a continuous and monotonic power rise, without any: power jump, prism jump, or image jump. The short transition zone is also enabling a moderate lowering of the gaze to reach the reading zone. Very short transition zone leads to high power gradients. High gradients cause disturbances when passing between the far zone and the near zone. Therefore, the transition zone should not be too short, and at least of the order of the pupil size. Incorporating a narrow transition zone in the lens design simplifies manufacturing and reduces the cylindrical aberration in the convergence path.

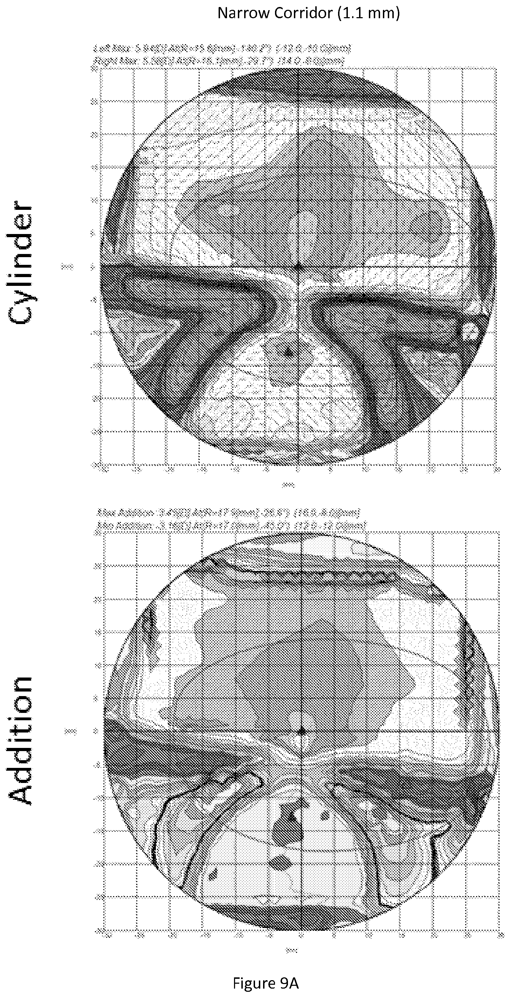

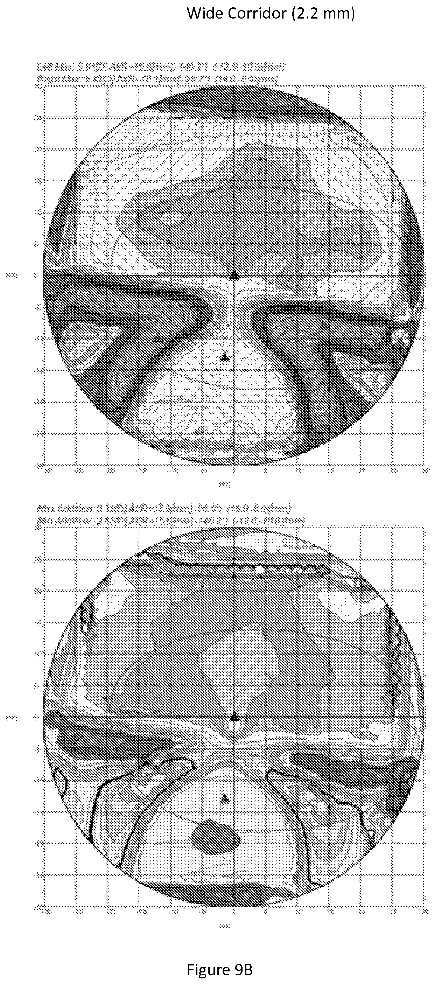

Fig. 9A, 9B presents an example of the differences between narrow and wide corridors (transition zones). A narrow corridor is presented in Figure 9A. The corridor width is 1.1 mm with cylindrical aberration less than 0.5 D (diopters), the cylinder power in the fitting point (FP) and in the near measuring point (NMP) are 0.02 and 0.05 diopters, respectively. A wide corridor is presented in Figure 9B. The corridor width is 2.2 mm with cylindrical aberration less than 0.5 diopters, the cylinder power in the FP and in the NMP are 0.05 and 0.12 diopters, respectively. The short and narrow transition zone is not designed to be optically functional, and therefore it might have high power gradients, especially in high addition prescriptions (e.g. above 2 diopters). An optically functional area should have stable optical properties, with less than 0.5 diopter optical power differences within a pupil diameter.

Benefits of the freeform quasi bifocal or quasi progressive new design may include one or more of the following:
Aesthetical benefit:
   No visible dividing line between vision zones.
Optical benefits:
   Natural accommodation as eye moves from one vision zone to another.
   No visual distortion along the natural eye convergence path as it travels from the far vision to the near vision zone.
   No power jump.
   No prism jump.
   No image jump.
   No loss of image.
   Less lowering of the gaze to reach the reading zone.
Manufacturing benefits:
   A freeform bifocal lens, either back or front surface lens design and easily producible with Freeform machinery available in the market.
   Available in a variety of materials, since any spherical single vision semi-finished blank can be used.
   Can be easily tinted and coated, since there is no surface discontinuity. Applying a hard coating (anti scratch coating) on flat top bifocals is not trivial and occasionally causes manufacturing issues.
   Easily adjusted to sunglasses - tinted, photochromic and polarized.
   Introduces a new generation of bifocal lenses.
   Offers ECPs (Eye Care Professionals) enhanced differentiation and professionalism.
   Introduces a new category between existing bifocal and progressive lenses by combining a bifocal design along with a progressive design both on a single lens surface, back or front.
   An additional prismatic power can be added to the near vision segment. In some cases the near vision segment may include only additional prismatic power and no additional sphere power.
   The far vision zone can be replaced with a midrange distance vision zone for an indoor uses. Range 0.5 to 4 m (e.g. computer distance 0.6 to 0.8 m, room size 2 to 3 m).
   The near vision zone can be replaced with a midrange distance vision zone for an indoor uses. Range 0.5 to 4 m (e.g. computer distance 0.6 to 0.8 m, room size 2 to 3 m).

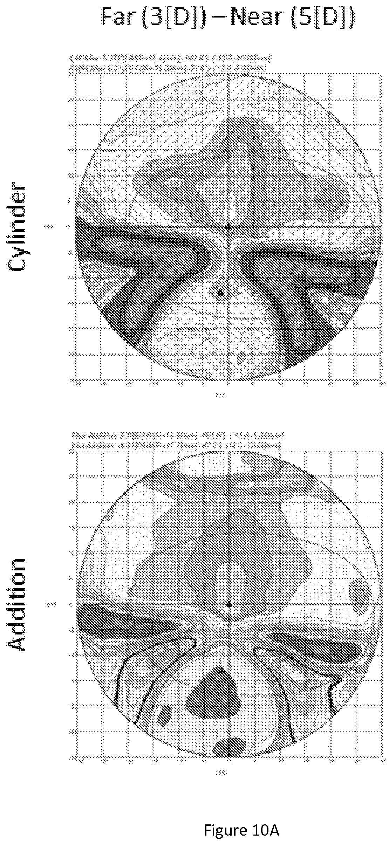

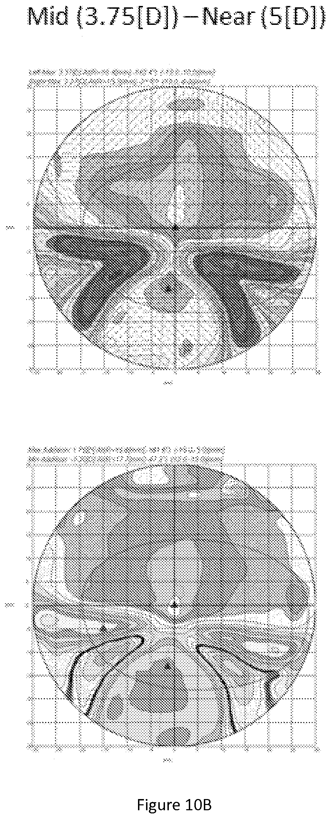

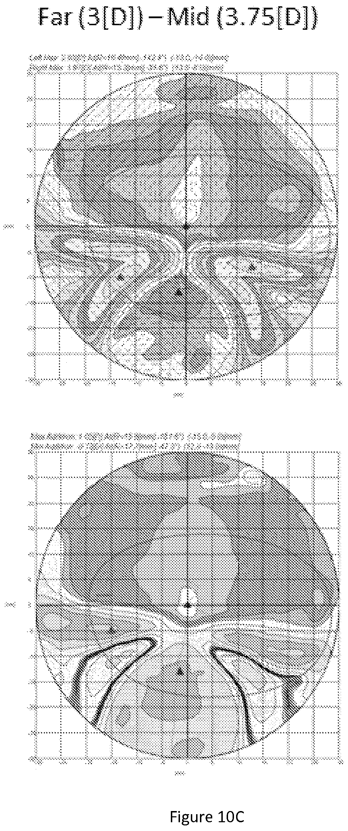

Figures 10A - 10C present examples for a quasi progressive lens with far sphere power 3 D and addition 2 D (Figure 10A), far sphere power of 3.75 D and addition of 1.25 D (the far power is equivalent to the mid-range power of the left lens at distance of 0.8 m, Figure 10B), and far sphere power of 3 D and addition of 0.75 D (the near power is equivalent to the mid-range power of the left lens at distance of 0.8 m, Figure 10C). Since the addition is much smaller in the lens illustrated in Figure 10B and the lens illustrated in Figure 10C as compared to the lens illustrated in Figure 10A, the transition zone can be wider and the peripheral aberrations can be reduced in the lenses illustrated in Figures 10B and 10C.

Various lenses can have the following features:
Clean and wide upper zone which can be used for far vision or midrange distance vision, the upper zone includes one or more of the following characters or characteristics:
Shape: circular, elliptic, rectangle (with or without rounded edges), etc.
Sphere power range: -20 to 20D.
Cylinder power range: -6 to 0D, or 0 to 6D in plus cylinder format.
Area free of Residual Cylinder (aberration) from a value of < 0.25, 0.12, 0.06, 0.03D.
Width Range 30 to 70mm, e.g. 50, 40, 30mm.
Height Range from 6° below the fitting point to 30° above the fitting point: e.g. -2° to 20°, -3° to 20°, -2° to 25°.
The upper zone can continue below fitting point (FP), Range: 0mm to 6mm (e.g. 2 to 3mm).

A Near segment with additional power and/or additional prism power relative to the far vision prism and at any prism orientation. The near (zone) segment includes one or more of the following characters or characteristics.
Shape: circular, elliptic, D shape (with or without rounded edges), etc.
Width Range: 12 to 24 mm.
Nominal Addition reached at about 10[mm] below fitting point (Range: 4mm to 20mm).
Area free of residual cylinder (aberration) from a value of < 0.25, 0.12, 0.06, 0.03D.
Addition Range: 0 to 4D.
Prism power range: 0 to 5 prism Diopters (PD).
Prism axis: horizontal, vertical, and any other skew axis.
Position: Below the fitting point, can be positioned along the line of convergence.

Corridor: The corridor can include one or more of the following characteristics: Short and narrow transition zone which allows a smooth transition between the two viewing segments (zones) as opposed to bifocal lenses with sharp segment boundaries or blended boundaries. The corridor is not designed to allow comfortable gazing in midrange distances between the far and near zones as progressive lenses do. It may have relatively little residual aberration values at its center.
Corridor Length Range: 4 mm to 8 mm (e.g. 6 to 8mm); Advantageously the corridor length between the far and near vision zones is preferably between about 5 mm and about 8 mm, between about 6 mm and about 8 mm, between about 4 mm and about 8 mm, about 4 mm, about 5 mm, about 6 mm, about 7 mm and about 8 mm.
These preferred lengths may result in significant benefits such as reduced residual cylinder power and/or reduced aberrations in the far vision optical zone, the near vision optical zone and/or in the peripheral zone.
Position: Below the fitting point, can be positioned along the line of convergence.
Area free of Residual Cylinder (aberration) from a value of < 0.50, 0.25, 0.12D.
Corridor Width Range with cylindrical aberration smaller than a threshold value as discussed above (e.g., < 0.50, 0.25, 0.12D): 0.5 to 10mm (e.g. 2 or 4mm).
No visible line between Far and Near vision zones.

The lens can further include one or more of the following characteristics:
Near segment edges can be one of the two below:
Narrow blending zone:
   Minimum of 3 to 4 mm width
   Very high aberration in the blending zone (Range 6 to 30D)
   Very low aberration in the periphery (<0.25D and less)
Wide blending zone:
   Medium to high aberration blending zone (Range 2 to 12D)
The residual cylindrical aberrations in the lens periphery depend on the corridor length. Shortening the corridor increases the residual cylindrical aberrations.
The corridor width for a given corridor length affects the residual cylinder in the two viewing segments. Wider corridor increases the residual cylinder in the viewing segments.
Accordingly, the maximum residual aberrations in the lens periphery depends on the corridor length, the corridor width for a given corridor length, and the near segment edge blending zone:
   The corridor length - the shorter the corridor the higher the maximum aberrations
   The corridor width for a given corridor length - the wider the corridor the higher the maximum aberrations
   The near segment edge blending zone - the narrower the edge blending zone the higher the maximum aberrations
Minimum Fitting Height Range 10 mm to 30 mm (e.g. 15mm, 18mm).
With (As Worn) or Without (Non As Worn) compensated prescription.

The lens can further include one or more of the following characteristics:
Lens Parameters:
Patient prescription:
Distance correction - sphere and cylinder power
Addition Power if needed
Mono Far PD (pupillary distance)
Fitting height (measured from the center of the pupil to the lower rim of the frame).
Frame width, Frame height, and DBL (Distance Between Lens), or trace data.
It may also include:
   Prism correction if needed, both at the far zone, and at the near zone relative to the far prism correction
   Additional prism correction if needed
   Frame type

The Fitting Point should coincide with the center of the pupil, using the invisible markings for verification (just like progressive lenses). The patient prescription is measured by an optometrist, ECP, ophthalmologist, or eye specialist. The rest of the lens parameters can have measured values or default values. They can be measured by an optometrist, ECP, ophthalmologist, or eye specialist, or can be calculated automatically or semi-automatically using image processing and/or computer vision techniques.

Available in vast variety of lens materials, e.g.: CR-39, Trivex, 1.56, SuperLite 1.60, SuperLite 1.67, Polycarbonate, and SuperLite 1.74, etc.

Available in vast variety of pretreatments e.g.: Clear, Transitions VI and VII (Gray, Brown), Transitions XtrActive, Transitions Vantage, Polarized (Gray, Brown) and Drivewear, etc.

Can be easily tinted and coated, e.g. a hard anti scratch coating.

The near optical zone may or may not have a prismatic power between 0 to 5 prism Diopter. For example, the near optical zone may have a prismatic power between 0.25 prism Diopter to 1.0, between about 0.5 prism Diopter to 2.0 prism Diopters, 1 to 5 prism Diopter, 1.5 to 4.5 prism Diopter, 2.0 to 4.0 prism Diopter, 2.5 to 3.5 prism Diopter or there between. The near optical zone can include a prism that is aligned along the vertical axis. The near optical zone can include a prism that is aligned along a horizontal axis or a skew axis that is neither horizontal nor vertical.

The far optical zone may or may not have a prismatic power between 0 to 5 prism Diopter. For example, the far optical zone may have a prismatic power between 0.25 prism Diopter to 1.0, between about 0.5 prism Diopter to 2.0 prism Diopters, 1 to 5 prism Diopter, 1.5 to 4.5 prism Diopter, 2.0 to 4.0 prism Diopter, 2.5 to 3.5 prism Diopter or there between. The far optical zone may include a prism that is aligned along the vertical axis. The far optical zone may include a prism that is aligned along a horizontal axis or along a skew axis that is neither horizontal nor vertical.

The transition region (corridor) can be configured to not allow comfortable gazing. For example, the transition region (or corridor) can have a spherical power gradient such that objects at intermediate distance cannot be viewed with sufficiently resolution through the transition region (corridor).

### Examples

### Example #1 - Shamir Duo^{™}

### Minimum Fitting Height 15 mm

| **Material** | **Prescription Range [D]** | **Addition** |
|---|---|---|
| **1.5 Hard Resin** Clear, Polarized, Transitions^{®} Drivewear^{®} Transitions^{®} Signature^{™} VII & XTRActive^{®} | -12.25 to +6.00 | 0.75 to 4.00 |
| **DLC^{™} 1.53** Clear, Polarized, Transitions^{®} Signature^{™} VII & XTRActive^{®} | -13.25 to +6.00 | 0.75 to 4.00 |
| **1.56** | -14.00 to +6.00 | 0.75 to 4.00 |
| **1.59 Polycarbonate** Clear, Polarized, Transitions^{®} Drivewear^{®}, Transitions^{®} Signature^{™} VII & XTRActive^{®} | -14.75 to +6.00 | 0.75 to 4.00 |
| **1.6 SuperLite^{™}** Clear, Polarized, Transitions^{®} Signature^{™} VII & XTRActive^{®} | -15.00 to +6.00 | 0.75 to 4.00 |
| **1.67 SuperLite** Clear, Polarized, Transitions^{®} Signature^{™} VII & XTRActive^{®} | -16.75 to +8.00 | 0.75 to 4.00 |
| **1.74 SuperLite** Clear | -18.75 to +15.50 | 0.75 to 4.00 |

### Ordering:

Patient prescription (Distance correction plus Addition Power)
Mono Far PD
Fitting height (measured from the center of the pupil to the lower rim of the frame)
Frame data: A, B and DBL
Frame type

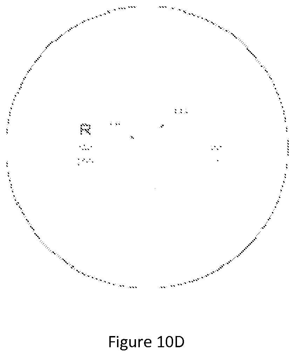

The Shamir Duo fitting point should coincide with the center of the pupil, using the invisible markings for verification (just like progressive lenses) as shown in Figure 10D.

### Example #2 - No Jump Bifocal

Non As Worn design
No visible line between Far and Near vision zones
Min FH (fitting height) 18[mm] or 81[mm]
Nominal Addition at about 10[mm] below FP
"Clear" zone: up to 2 to 3[mm] below FP
Segment Width: 20[mm]
Additions range: 1.00 to 3.50[D]

One innovative aspect of the subject matter disclosed herein includes an ophthalmic lens comprising a first optical zone; a second optical zone including a prismatic segment aligned along a non-horizontal axis and capable of providing prismatic correction, the prismatic segment including a first prism and capable of providing prism power different from a prism power provided by the first optical zone; and a transition zone connecting the first optical zone and the second optical zone, the transition zone having a maximum residual cylinder power that is at least twice the magnitude of the prism power of the second optical zone.

The first optical zone can provide prescription prism power of 0 prism Diopter. The transition zone can be between the first optical zone and the second optical zone. The second optical zone can be capable of providing prism power between 0.1 - 5 prism Diopter. The first optical zone can include a second prism capable of providing prism power between 0.1 - 5 prism Diopter. The second prism can be aligned along a vertical axis or along a skew axis that is neither vertical nor horizontal. The second prism can be aligned along a horizontal axis. The first prism included in the second optical zone can be aligned along a vertical axis or along a skew axis. The second optical zone can be capable of providing near vision or intermediate distance vision. The first optical zone can be capable of providing far vision or intermediate distance vision.

The lens can have a fitting point and the first optical zone can be located between about 6 degrees below the fitting point to about 30 degrees above the fitting point when the ophthalmic lens is worn by a patient. When the lens is worn by a patient, the first optical zone can be located above the fitting point and the second optical zone located below the fitting point. The first optical zone can be located between about 3 degrees below the fitting point to about 20 degrees above the fitting point. The first optical zone can be located between about 2 degrees below the fitting point to about 25 degrees above the fitting point. A distance between the fitting point and a lower portion of the first optical zone can be between about 0 mm and about 6 mm. The distance between the fitting point and the lower portion of the first optical zone can be between about 2 mm and about 3 mm. The nominal prism power of the prismatic segment can be reached at a distance between about 4 mm and about 20 mm below the fitting point. The second optical zone can have a width between about 6 mm to about 40 mm. The first optical zone can have a width between about 20 mm and about 70 mm. The second optical zone can have a residual cylinder power less than 0.25 Diopter. The second optical zone can have residual cylinder power less than 0.12 Diopter. The first optical zone can have residual cylinder power less than 0.25 Diopter. The first optical zone can have residual cylinder power less than 0.12 Diopter. The transition zone can have a maximum residual cylinder power that is at least thrice the magnitude of the prism power of the second optical zone. The transition zone can have a maximum residual cylinder power that is at least four times the magnitude of the prism power of the second optical zone. The transition zone can have a maximum residual cylinder power that is less than or equal to 12 Diopter. The residual cylinder power of the transition zone can be along a convergence path from the first optical zone to the second optical zone. A magnitude of the prism power of the first prism along a vertical direction can increase along a convergence path from the first optical zone to the second optical zone.

Another aspect of the subject matter disclosed herein but not forming part of the claimed invention includes a computer implemented method of determining a shape of a rear surface and/or a forward surface of an ophthalmic lens based on a prescription received from an eye care professional. The method includes determining shape of various optical regions to be disposed on the rear surface and/or the front surface of an ophthalmic lens such that the prescribed spherical, cylindrical and/or prismatic powers are provided by the various optical regions. For example, the shape of a far vision zone, a near vision zone, a transition region connecting the far and the near vision zones, as well as peripheral areas can be determined using the method described herein. The shape of a rear surface and/or a front surface of the lens can be such that the near vision zone has a width between 6 mm to 40 mm; the transition region (corridor) can have a length that is between 3 mm and 10 mm; and the far optical zone can have a width between 20 mm and 70 mm. For example, the corridor can have a length that is between 6 mm and 8 mm. The shape of the lens can be configured such that the corridor has a residual cylinder power less than 1.0 Diopter. For example, the corridor can have a residual cylinder power less than 0.5 Diopter. Additionally, the shape of the lens can be configured such that the near vision zone and/or the far vision zone provide prismatic power between 0 to 5 prism Diopter. Accordingly, the shape of the near vision zone and/or the far vision zone can include a prism that is aligned along a horizontal axis, a vertical axis or a skew axis that is neither horizontal nor vertical. The shape of the lens is optimized such that the near vision zone and/or the far vision zone can have a residual cylinder power less than 0.25 Diopter. For example, the near optical zone can have a residual cylinder power less than 0.12 Diopter. The shape of the lens can be configured such that the resulting lens is a quasi progressive lens having the characteristics described herein. Accordingly, the transition region (corridor) can have a shape such that a patient gazing through the transition region (corridor) is not able to view objects at intermediate distance with sufficiently resolution.

Once the shape is determined, the description of the shape, set forth in a data file, can be used to employ free-form manufacturing technology to polish or shape the rear side of a lens or lens blank from which the lens is cut. Such manufacturing technology may comprise a CNC machine that is driven by the data in the data file.

### BRIEF DESCRIPTION OF THE DRAWINGS

Understanding of the present invention will be facilitated by consideration of the following detailed description of the preferred embodiments of the present invention taken in conjunction with the accompanying drawings, in which like numerals refer to like parts.
Figure 1 shows a schematic representation of an example of a flat-top bifocal lens.
Figure 2 shows a schematic representation of an example of a blended bifocal lens.
Figure 3A is a schematic illustration of an embodiment of a progressive lens further illustrating the residual cylinder power or aberrations in the peripheral zones of the lens. Figure 3B illustrates a schematic contour plot of the addition power in the different portions of the embodiment of progressive lens shown in Figure 3A.
Figures 4A and 4B schematically illustrate different embodiments of quasi progressive lenses. Figure 4C illustrates a quasi progressive lens as viewed under an arc lamp. Figure 4D illustrates a cubes screen viewed through am embodiment of a quasi progressive lens.
Figures 5A, 5B and 5C schematically illustrate cross-sectional views of an embodiment of a flat-top bifocal lens, an embodiment of a blended bifocal lens, and an embodiment of a quasi progressive lens, respectively. Figure 5D schematically illustrates a cross-sectional view of an embodiment of a quasi progressive lens.
Figure 6A schematically illustrates a technique of measuring the length of the transition zone included in a quasi progressive lens. Figure 6B schematically illustrates a technique of measuring the width of the transition zone included in a quasi progressive lens.
Figures 7A and 7B illustrate maps of the residual cylinder power or aberrations in various optical zones for an example of a blended bifocal lens and a quasi progressive lens, respectively.
Figures 8A and 8B illustrate the variation of the optical addition power and the residual cylinder power as a function of view angle in various optical zones for an example of a blended bifocal lens and an embodiment of a quasi progressive lens respectively. Figure 8C illustrates a map of the residual cylinder power or aberrations and the add power in various optical zones for an example of a blended bifocal lens. Figure 8D illustrates a map of the residual cylinder power or aberrations and the add power in various optical zones for an embodiment of a quasi progressive lens.
Figure 9A illustrates variation in the optical addition power and the residual cylinder power in various optical zones for an embodiment of a quasi progressive lens with a narrow corridor. Figure 9B illustrates variation in the optical addition power and the residual cylinder power in various optical zones for an embodiment of a quasi progressive lens with a wide corridor.
Figure 10A, 10B and 10C represents implementations of a quasi progressive lens with different sphere and addition powers. Figure 10D illustrates an embodiment of a lens with markings.
Figure 11 illustrates an embodiment of a quasi bi-prism lens including a prismatic segment.
Figure 12A illustrates variation in the addition power and the residual cylinder power in various optical zones for an embodiment of a quasi bi-prism lens including a prismatic segment with a prism aligned with the horizontal axis.
Figure 12B illustrates variation in the addition power and the residual cylinder power in various optical zones for an embodiment of a quasi bi-prism lens including a prismatic segment with a prism aligned with the vertical axis.
Figure 12C-1 illustrates a contour map of the prism power across the surface of an embodiment of a quasi bi-prism lens including a prismatic segment with a prism aligned with the vertical axis. Figure 12C-2 illustrates the variation in the prism power across the first and second optical zone.

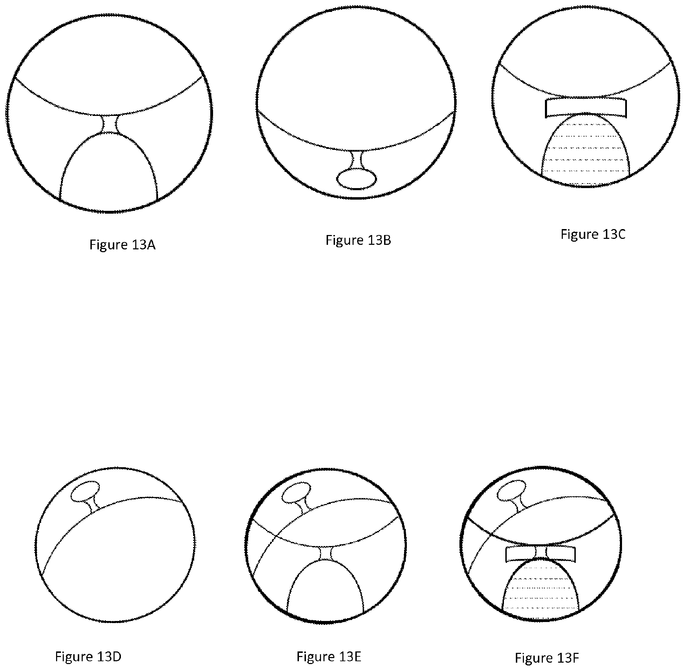

Figure 13A illustrates an implementation of a quasi progressive lens. Figure 13B illustrates an implementation of a quasi progressive lens with a small segment. Figure 13C illustrates an implementation of a quasi bi-prism lens. Figure 13D illustrates an implementation of a multi segment lens which is configured as a single vision lens with a top-left quasi progressive small segment. Figure 13E illustrates an implementation of a multi segment lens which is configured as a quasi progressive lens with a top-left quasi progressive small segment [Figure 13A + Figure 13B]. Figure 13F illustrates an implementation of a multi segment lens which is a combination of quasi progressive lens and a quasi bi-prism lens with a top-left quasi progressive small segment [Figure 13A + Figure 13B + Figure 13C].

### DETAILED DESCRIPTION OF THE PREFERRED EMBODIMENT

It is to be understood that the figures and descriptions of the present invention have been simplified to illustrate elements that are relevant for a clear understanding of the present invention, while eliminating, for the purpose of clarity, many other elements found in typical lenses, lens design and/or manufacturing methods, and eyewear. Those of ordinary skill in the arts can recognize that other elements and/or steps are desirable and may be used in implementing the embodiments described herein.

As used herein, the term "fitting point" may indicate a point on a lens as mounted in a spectacle frame, aligned with the patient's center of the pupil in its distance viewing position when the patient is looking straight ahead.

The term "clean" used in reference with an optical zone or area including a powered surface indicates that optical zone or area has residual cylinder power or aberrations below a threshold (e.g., less than 1.0 Diopter, less than 0.75 Diopter, less than 0.5 Diopter, less than about 0.25 Diopter, less than about 0.12 Diopter, less than about 0.06 Diopter, less than about 0.03 Diopter, etc.).

As used herein, the term "prism Diopter" is a unit that describes the optical power of a prism. A prism having an optical power of 1 prism Diopter can produce a 1 cm deviation in a ray of light at a distance of 1 m from the prism.

The term "visual distortion" as used herein is a result of unwanted or residual cylinder and as such is quantified using residual cylinder power.

The term "residual cylinder power" or "residual cylinder" is used herein consistently as understood by those skilled in the art to indicate the cylinder power obtained by subtracting any prescribed cylinder power from the total cylinder power. Such calculations are known by one skilled in the art.

The term "far vision" or "distance vision" as used herein indicates the refraction correction the eye of a patient requires from a vision correcting lens when viewing objects at a distance greater than about 6.1 m (20 feet) while the patient uses no accommodation. The term "near vision" as used herein indicates the refraction correction the eye of a patient requires from a vision correction lens when viewing objects at a distance of about 40.64 cm (16 inches), taking into account the patient's accommodation ability. The term "medium vision" or "intermediate distance vision" as used herein indicates the refraction correction the eye of a patient requires from a vision correcting lens when viewing objects at a distance greater than 40.64 cm (16 inches) and less than or equal to about 6.1 m (20 feet) while the patient uses no accommodation.
The term "far optical zone" or "far zone" as used herein refers to the optical zone or area that is configured to provide distance vision. The term "near optical zone" or "near zone" as used herein refers to the optical zone or area that is configured to provide near vision.

The term "near reference point" is used herein consistently as set forth in ANSI 3.21.3 standard and indicates the point on a lens as specified by the manufacturer at which the addition of power is measured.

As used herein, the terms "slope" and "gradient" can be used interchangeably. As used herein optical power is measured in Diopter and can be expressed with units of "Diopter" or "D". As used herein the terms "add power" "addition" and "addition power" can be used interchangeably. As used herein the terms "corridor" and "transition zone" can be used interchangeably. As used herein the terms "segment" and "zone" can be used interchangeably.

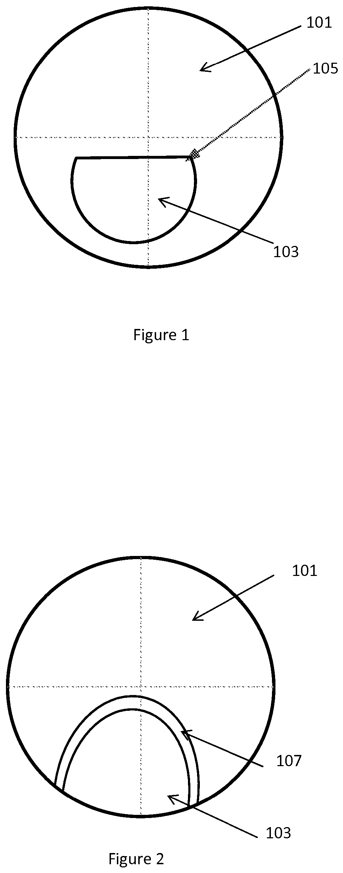

Various bifocal lenses available in the market today include (a) flat-top bifocal lens and (b) blended bifocal lens. Figure 1 shows a schematic representation of an embodiment of a flat-top bifocal lens. The illustrated embodiment of a flat-top bifocal lens includes a first optical zone 101 that is capable of providing distance or far vision and a second optical zone 103 that is capable of providing near vision. The first optical zone 101 has optical properties such that it is capable of providing distance vision (e.g., at far distances greater than 6.1 m (20 feet). The second optical zone 103 has optical properties such that it is capable of providing near vision (e.g., at near distances of about 40.64 cm (16 inches)). A visible dividing line 105 separates the first optical zone 101 and the second optical zone 103. In various implementations, the first and second optical zones 101 and 103 can be offset with respect to each other along a z-axis (shown), such that the first and second optical zones 101 and 103 are physically discontinuous. Likewise, the surface of the lens is not smooth at this location and instead has an abrupt discontinuity in the surface gradient. Without any loss of generality, in various cases the power of the first optical zone 101 can be smaller than the power of the second optical zone 103 such that the second optical zone 103 has more addition power than the first optical zone 101.

As the patient's gaze moves from viewing objects at far distances to viewing objects at near distances, the patient's pupil traces a path referred to as the "natural convergence path" or "convergence path." This path can refer to the vertical and horizontal gaze angle a patient uses to view objects that are straight ahead and at varying distances. Without any loss of generality, the projection of the convergence path on the surface of the lens is oblique and extends along a line that is coincident with the axis of symmetry of the first optical zone to a more nasal location disposed in the lower portion of the lens. Accordingly, the second optical zone 103 is disposed more nasally (or towards a patient's nose) in the lower portion of the lens.

Embodiments of flat-top bifocal lenses can have several disadvantages. For example, the optical power can abruptly change as the patient's gaze moves from viewing objects located at far distances through the first optical zone 101 to viewing objects located at near distances through the second optical zone 103. This abrupt change in optical power can result in discontinuity of accommodation of the patient's eye, temporary loss of image at intermediate distances between near and far distances and/or a shift in the image or image jump. These effects can degrade the viewing experience. Moreover, only certain lens materials can be used for flat-top bifocal lenses. In addition, due to the discontinuity of the lens surface at the transition between the two zones, a high level of effective residual cylinder power or aberrations can be encountered as the eye transverses across this transition when following the convergence path. Additionally, due to the discontinuous nature of their surface, flat-top bifocal lens cannot be manufactured using conventional Freefrom techniques and machines available today in many processing labs. It therefore follows that flat top bifocals cannot be manufactured in a conventional processing lab using conventional spherical semi-finished blanks. Instead, semi-finished blanks already incorporating the discontinuous properties of the lens surface have to be manufactured for different materials. These semi-finished blanks may be specific for manufacturing flat bifocal lenses, and as such can be less versatile than spherical semi-finished blanks that are widely available in the market from which many continuous lens designs can be manufactured using freeform technology. Accordingly, a patient may have limited selection of materials and treatment options when ordering flat-top bifocal lenses. Furthermore, the optometrist or the lab that manufactures flat-top bifocal lenses may need to keep a full inventory of specialized semi-finished optical lens blanks for each treatment (e.g. polarized, photochromic, and NXT lenses) option.

Figure 2 shows a schematic representation of an embodiment of a blended bifocal lens. In the illustrated embodiment of a blended bifocal lens, the first optical zone 101 and the second optical zone 103 are separated by a blended zone 107. The blended zone 107 is border that surrounds the second optical zone 103. In the illustrated implementation, the second optical zone 103 has a central width of about 24 mm, and the blended zone 107 has a uniform thickness of about 3 mm. The blended zone 107 can have an optical power gradient such that there is a smooth transition of optical power from the first optical zone 101 to the second optical zone 103. Accordingly, the presence of the blended zone 107 can also eliminate a physically discontinuity between first and second optical zones 101 and 103 such that the separation between the first and second optical zones 101 and 103 is not visible. Additionally, the abrupt discontinuity in optical power between the first optical zone 101 and the second optical zone 103 can be avoided. While, the blended bifocal lenses may be more aesthetically appealing over flat-top bifocal lenses, visual distortion, temporary loss of image and/or an image jump can occur in the blended zone 107 as the patient's gaze shifts from the first optical zone 101 to the second optical zone 103. In addition, the power gradients and/or the residual cylinder power in the blended zone 107 can be high due to the short length of the blended zone 107. The patient's eye, as it traverses the convergence path in moving from the first optical zone 101 (distance vision zone) to the second optical zone 103 (near vision zone) will traverse through the blended zone 107. The high power gradients and/or the residual cylinder power in the blended zone 107 can cause vision discomfort.

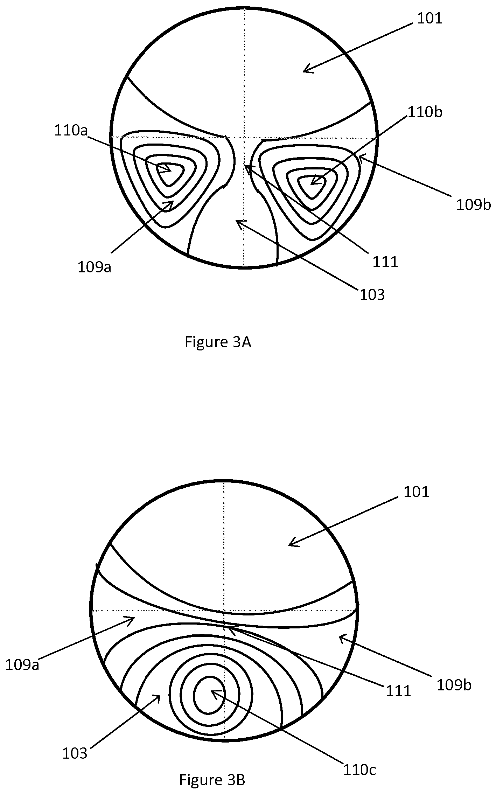

Progressive lenses available in the market today can overcome some of the disadvantages of bifocal lenses. Figure 3A is a schematic illustration of an embodiment of a progressive lens further illustrating the residual cylinder power or aberrations in the peripheral zones of the lens. A progressive lens includes a first optical zone 101 capable of providing far vision; a second optical zone 103 capable of providing near vision; a corridor (or a transition zone) 111 connecting the first and the second optical zones 101 and 103 and one or more peripheral zones 109a and 109b disposed about the corridor 111. The corridor 111 is a region on the surface of the lens between the first optical zone 101 and the second optical zone 103 where the optical addition power gradually increases (e.g., monotonically increases or linearly increases) as the patient's gaze moves from far vision to near vision along the natural convergence path while the maximum residual cylinder power and/or aberrations is below a threshold. The threshold can be about 0.5 Diopter, about 0.25 Diopter or about 0.12 Diopter. The optical addition power gradient and size of the corridor 111 is configured such that objects at intermediate distance (for example between about 2 feet and about 6 feet) can be viewed comfortably through the corridor 111. The length and/or width of the corridor 111 for a progressive lens can be adjusted such that peripheral zones 109 have residual cylinder powers and/or aberrations below a threshold.

In various implementations of available progressive lenses, the separation between the first optical zone 101, the corridor 111 and the second optical zone 103 is not visible. Thus, such implementations of progressive lenses may be aesthetically pleasing. Furthermore, since the optical power transitions smoothly and continuously across the first optical zone 101, the corridor 111 and the second optical zone 103 along the convergence path of the patient's eye, visual distortion and other effects such as loss of image, image jump are eliminated or significantly reduced when a patient's gaze shifts from far vision to near vision. However, in most progressive lenses, the second optical zone 101 occupies a smaller portion of the surface area of the progressive lens as compared to the portion of the surface area of the progressive lens occupied by the first optical zone. In various implementations, the area of the second optical zone 103 can be significantly smaller than the area of the first optical zone 101. In addition, due to the long corridor between the first optical zone 101 and the second optical zone 103, a patient may have to lower his/her gaze considerably when transitioning from a distance vision state to a near vision state. This can cause discomfort to some patients.

The embodiment of the progressive lens illustrated in Figure 3A includes two peripheral zone 109a and 109b disposed on either side of the corridor 111. The peripheral zone 109a is disposed nasally while the peripheral zone 109b is disposed temporally. Figure 3A illustrates the residual cylinder power in the peripheral zones 109a and 109b as contours. The outermost contour indicates the boundary of the region having least residual cylinder power while the inner most contour indicates the boundary of the region having maximum residual cylinder power. In the embodiment illustrated in Figure 3A, region 110a has the maximum residual cylinder power in the nasal peripheral zone and region 110b has the maximum residual cylinder power in the temporal peripheral zone.

Figure 3B illustrates the schematic contour plot of the addition power in the different portions of the embodiment of progressive lens shown in Figure 3A. Different contours indicate the boundaries of regions with different optical addition powers. The region 110c of the second optical zone corresponds to the region with maximum addition power. The optical addition power progressively decreases away from the region 110c towards the peripheral zones 109a and 109b. It is noted from Figure 3B that the addition power in the corridor 111 increases gradually (e.g., monotonically or linearly) from the first optical zone 101 to the second optical zone, as discussed above.

Various embodiments disclosed herein provide quasi progressive ophthalmic solutions (such as, for example, lens blanks, eyeglass lenses, and glasses for eyewear) that include a short and/or narrow transition zone or corridor 113 between the first optical zone 101 and the second optical zone 103. Quasi progressive lenses can overcome some of the disadvantages of bifocal lenses and progressive lenses as discussed below. For example, contrary to the blended bifocals, there is no image jump as the patient's eye traverses from the first optical zone 101 to the second optical zone 103 along the convergence path of a quasi progressive lens. As another example, the aberrations in the transition zone or corridor 113 can be less than a threshold value (e.g., less than 0.5 Diopters, less than 0.75 Diopters, less than 1.0 Diopters, less than 1.25 Diopters, less than 2.0 Diopters, less than 3.0 Diopters, less than 4.0 Diopters, less than 5.0 Diopters, etc.) in various implementations of quasi progressive lenses as opposed to the blended bifocal lenses. As another example, the aberrations in the transition zone or corridor 113 e.g., having a width between about 0.1 mm and about 5 mm, between about 0.2 mm and about 4 mm, between about 0.2 mm and about 6 mm, between about 0.5 mm and about 5mm, between about 0.5 mm and about 4 mm, between about 0.1 mm and about 2.0 mm, or between about 0.5 mm - 3.0 mm can be less than a threshold value (e.g., less than 0.5 Diopters, less than 0.75 Diopters, less than 1.0 Diopters, less than 1.25 Diopters, less than 2.0 Diopters, less than 3.0 Diopters, less than 4.0 Diopters, less than 5.0 Diopters, etc.) in various implementations of quasi progressive lenses as opposed to the blended bifocal lenses. Figures 4A and 4B schematically illustrate different embodiments of a quasi progressive lens having a first optical zone 101 capable of providing distance vision (or alternately intermediate distance vision in some embodiments) connected to a second optical zone 103 capable of providing near vision (or alternately intermediate distance vision in some embodiments) by a transition zone 113. The first optical zone 101 can be referred to as the far vision zone when configured to provide distance vision. The second optical zone 103 can be referred to as the near vision zone when configured to provide near vision. As used herein, the transition zone 113 is a region on the surface of the quasi progressive lens between the first optical zone 101 and the second optical zone 103 where the optical addition power gradually increases (e.g., monotonically increases or linearly increases) as the patient's gaze moves from far vision to near vision along the natural convergence path while the maximum residual cylinder power and/or aberrations is below a threshold. The threshold can be about 0.5 Diopter, about 0.25 Diopter or about 0.12 Diopter.

The embodiment illustrated in Figure 4A includes two distinct and separated peripheral zones 109a (disposed nasally) and 109b (disposed temporally). In the embodiment illustrated in Figure 4B the second optical zone 103 is disposed with respect to the lower edge of the lens such that the two distinct peripheral zones 109a (disposed nasally) and 109b (disposed temporally) are connected along the lower edge of the lens to form a single peripheral zone 109. In various implementations, the first optical zone 101, the second optical zone 103, the transition zone 113 and the peripheral zones 109a and 109b are formed on the same surface (either front surface or back surface) of a lens. The first optical zone 101, the second optical zone 103, the transition zone 113 and the peripheral zones 109a and 109b are formed on the surface of the lens blank such that the surface of the lens blank appears smooth without any steps, indentations, or protrusions.

Embodiments of quasi progressive lenses have several advantages over bifocal lenses. For example, the transition zone 113 connecting the first and second optical zones 101 and 103 advantageously avoids geometric singularities such as a singular point or line between the first and second optical zones 101 and 103. The geometric differences between quasi progressive lens, flat-top bifocal lens and a blended bifocal lens are illustrated in Figures 5A, 5B and 5C which schematically illustrate cross-sectional views of an embodiment of a flat-top bifocal lens, an embodiment of a blended bifocal lens and an embodiment of a quasi progressive lens, respectively. As illustrated in Figure 5A, the first and second optical zones 101 and 103 for the illustrated embodiment of a flat-top bifocal lens are separated by a visible step and edge 105 which represents a line of physical discontinuity in the surface and accompanying optical discontinuity.

As noted from Figure 5A, the surface of the lens including the slope of the surface of the lens (also referred to as prism) and the optical power, which is correlated to the second derivate of the surface of the lens, transition abruptly across the line 105. Additionally, the surface of the lens itself has a discontinuity due to the second optical zone 103 being physically offset from the first optical zone 101 by a distance measured in the z direction (see z-axis).

In contrast, as noted from Figure 5B, a blended bifocal lens does not exhibit a physical step discontinuity between the first and second optical zones 101 and 103. Instead a smooth transition is provided between the first and second optical zones 101 and 103. However, the optical power as well as the prism changes rapidly across the blended zone 107. This rapid change in the surface introduces high levels of residual cylinder power or aberrations which can lead to disadvantageous optical effects.

As noted from Figure 5C, the first and second optical zones 101 and 103 are not physically offset with respect to each other thus there is no physical discontinuity in the surface of the lens. In fact, the transition zone 113 connects the first and the second optical zone 101 and 103 continuously to form a smooth surface. Accordingly, the transition zone 113 connects the first and the second optical zones 101 and 103 without a surface discontinuity. Additionally, the slope of the surface of the lens (prism) also varies continuously across the transition zone 113. Accordingly, the transition zone 113 connects the first and the second optical zones 101 and 103 without a discontinuity in the slope of the surface. The transition zone 113 can also be devoid of discontinuity in the surface curvature. Additionally, the transition zone 113 can be devoid of discontinuity in the slope of the surface curvature. However, it is noted from Figure 5C that the optical power, which is correlated with the second derivative of the surface of the lens, varies rapidly across the transition zone 113 between the first optical zone 101 and the second optical zone 103.

Accordingly, the quasi progressive lens may be aesthetically more pleasing. Additionally, the continuity of the slope of the surface of the lens across the transition zone 113 may be advantageous in avoiding loss of image and/or image jumps as the patient's gaze shifts from distance vision to near vision through the convergence path. In other words, since there is not discontinuity in the surface of the lens across the transition zone 113 or in the slope of the surface of the lens across the transition zone 113, there may no loss of image and/or image jumps as the patient's gaze shifts from distance vision to near vision through the convergence path. In addition, as a direct consequence of the overall continuity of the lens, less unwanted residual cylinder power or aberrations are encountered along the convergence path in the quasi progressive relative to the flat top and blended bifocal designs. Accordingly, a patient when using quasi progressive lenses may be able to transition from distance vision to near vision and experience less distortion and have a more positive viewing experience as compared to when using conventional blended bifocal as well as flat-top bifocal lenses.

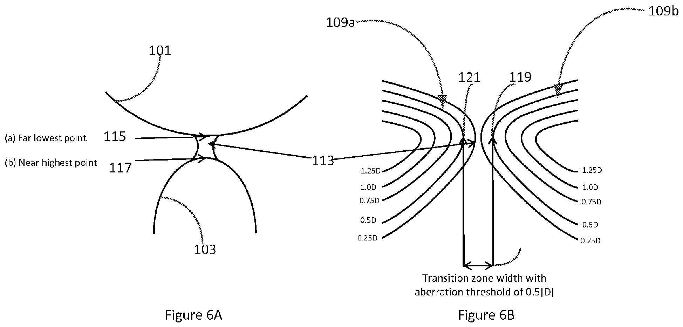

The length of the transition zone 113 can be obtained by analyzing measurements of the addition power in the first and second optical zones 101 and 103 and in the transition zone 113. For example, one technique of measuring the length of the transition zone 113 includes starting from the first optical zone 101 and obtaining a first point in, adjacent to, and/or proximal to the first optical zone 101 along the convergence path below the fitting point (FP) where the addition power has a lower threshold value and obtaining a second point in, adjacent to and/or proximal the second optical zone 103 where the addition power has an upper threshold value. The length of the transition zone 113 is the distance between the first and second points. Figure 6A schematically illustrates this technique of measuring the length of the transition zone 113. In Figure 6A, the first point is indicated by the reference numeral 115 and second point by reference numeral 117. The length of the transition zone 113 for the embodiment illustrated in Figure 6A is the distance between the first point 115 and the second point 117.

In various embodiments, the lower threshold value can correspond to the minimum addition power. In various embodiments, the lower threshold value can be between about 0 Diopter and about 0.25 Diopter (e.g., 0, 0.01 Diopter, 0.03 Diopter, 0.05 Diopter, 0.1 Diopter, or 0.125 Diopter). In various embodiments, the upper threshold value can correspond to the maximum addition power. In various embodiments, the upper threshold value can correspond to the maximum addition power minus a subtraction value. The subtraction value can be between about 0 Diopter and 0.25 Diopter (e.g., between about 0 Diopter and about 0.25 Diopter (e.g., 0, 0.01 Diopter, 0.03 Diopter, 0.05 Diopter, 0.1 Diopter, or 0.125 Diopter).

The width of the transition zone 113 can be obtained by measuring the residual cylinder power in the peripheral zones 109a and 109b. The width of the transition zone 113 is measured for a particular residual cylinder power or aberration threshold. In one technique of measuring the width of the transition zone 113, a left most point of the temporal peripheral zone 109b and a right most point of the nasal peripheral zone 109a where the maximum residual cylinder power is below a threshold cylinder power is determined. The width of the transition zone 113 for that threshold residual cylinder power is the distance between the left most and right most points. Figure 6B schematically illustrates this technique of measuring the width of the transition zone 113. In Figure 6B, the left most point of the temporal peripheral zone 109b at which the maximum residual cylinder power is below 0.5 Diopter is indicated by the reference numeral 119 and right most point of the nasal peripheral zone 109a at which the maximum residual cylinder power is below 0.5 Diopter is indicated by the reference numeral 121. The width of the transition zone 113 for the embodiment illustrated in Figure 6B is the distance between the point 119 and the point 121. In various embodiments of the quasi progressive lenses described herein, the width of the transition zone 113 can be between about 1 mm and about 10 mm, between about 2 mm and about 9.0 mm, between about 3 mm and about 8.0 mm, between about 4 mm and about 7.0 mm, between about 5 mm and about 6 mm, between about 0.1 mm and about 5 mm, between about 0.2 mm and about 4 mm, between about 0.2 mm and about 6 mm, between about 0.5 mm and about 5mm, or between about 0.5 mm and about 4 mm for different threshold values of residual cylinder power. For example, referring to Figure 6B, the width of the transition zone 113 where the maximum residual cylinder power is below a threshold residual cylinder power of 0.75 Diopter is greater than the width of the transition zone 113 where the maximum residual cylinder power is below a threshold residual cylinder power of 0.5 Diopter. As another example, the width of the transition zone 113 where the maximum residual cylinder power is below a threshold residual cylinder power of 1.0 Diopter is less than the width of the transition zone 113 where the maximum residual cylinder power is below a threshold residual cylinder power of 1.25 Diopter.

The transition zone 113 for various embodiments of quasi progressive lens has a longer length as compared with the length of the blended zone 107 of blended bifocal lenses. Thus, the optical power gradient in the transition zone 113 of an embodiment of a quasi progressive lens is lower than the optical power gradient in the blended zone 107 of blended bifocal lens. Accordingly, a patient may have less discomfort when transitioning from a distance vision state to a near vision state when using quasi progressive lenses as compared to when using blended bifocal lenses.

Furthermore, as discussed above, the presence of the transition zone 113 allows a smooth and continuous transition between the first optical zone 101 and the second optical zone 103 as shown in Figure 5C. Moreover, as discussed above with reference to Figure 5C, the length and shape of the transition zone 113 in various embodiments of quasi progressive lenses is configured to provide a continuous and monotonic increase in optical power from the first optical zone 101 to the second optical zone 103 without any physical surface discontinues (e.g., in z direction) or fast prism change. Accordingly, the embodiments of quasi progressive lenses can have reduced visual distortion along the convergence path (for example, one order of magnitude lower) as compared to blended and flat-top bifocal lenses. Furthermore, the power change across the blended zone 107 of a blended bifocal lens can be fast and volatile as compared to the power change across the transition zone 113 of a quasi progressive lens which can result in increased distortion in a blended bifocal lens along the convergence path as compared to a quasi progressive lens. As used herein, visual distortions refer to the amount of residual cylinder power or aberrations. Reduced distortions include residual cylinder power or aberrations below an aberration threshold, such as, for example, about 1.0 Diopter, 0.75 Diopter, 0.5 Diopter, 0.25 Diopter, or 0.125 Diopter. For example, the residual cylinder power or aberrations along the convergence path between the first optical zone 101 and the second optical zone 103 can be greater than 5 Diopters for blended bifocal lenses having an addition power of about 2 Diopters and in theory infinite for flat-top bifocal lenses. In contrast, the residual cylinder power or aberrations along the convergence path between the first optical zone 101 and the second optical zone 103 for various embodiments of quasi progressive lenses described herein can be less than about 5 Diopters. According to the claimed invention, the residual cylinder power or aberrations along the convergence path from the first optical zone 101 to the second optical zone 103 is less than or equal to about 0.5 Diopter, less than or equal to about 0.25 Diopter, less than or equal to about 0.125 Diopter, etc.

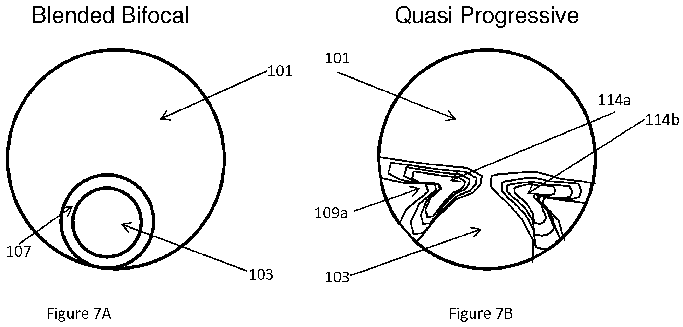

Figures 7A - 7B and 8A - 8B illustrate the differences between an embodiment of a blended bifocal lens and an embodiment of a quasi progressive lens. Figure 7B illustrates a map of the residual cylinder power for an embodiment of a quasi progressive lens. Embodiments of the blended bifocal lens can have high values for maximum residual cylinder power in the blended zone 107 along the convergence path. For example, in some embodiments, the maximum residual cylinder power can be about 10.64 Diopter in the blended zone 107 along the convergence path between the first and the second optical zones 101 and 103. In contrast, as discussed above, for embodiments of quasi progressive lenses, the residual cylinder power in the transition zone 113 which is along the convergence path is reduced. In fact, as noted from Figure 7B, the maximum value of the residual cylinder power occurs in the peripheral zone for the embodiment of the quasi progressive lens which lies outside the convergence path. Accordingly, the embodiment of the quasi progressive lens has a reduced visual distortion as compared to the embodiment of the blended bifocal lens and the residual distortion is distributed off to the periphery. The variation of residual cylinder power along the convergence path for an embodiment of a blended bifocal lens and an embodiment of a quasi progressive lens is illustrated in Figures 8A and 8B.

Figures 8A and 8B illustrate the variation of the optical addition power and the residual cylinder power as a function of view angle in various optical zones for an embodiment of a blended bifocal lens and an embodiment of a quasi progressive lens respectively. Referring to Figures 8A and 8B, the curve 2 shows the variation of optical addition power as a function of view angle in various optical zones, while the curve 4 shows the variation of residual cylinder power as a function of view angle in various optical zones. The view angle corresponds to the vertical angle of gaze along the convergence path relative to the fitting point. A view angle of zero corresponds to a patient gazing straight ahead at the horizon through the fitting point. The view angle can also be considered as the angle that the line of sight makes with the fitting point when the patient is viewing objects at various distances. The view angle can be correlated to the vertical distance from the fitting point the convergence path on the surface of the lens.

It is noted from Figure 8A that for the embodiment of the blended bifocal lens, the residual cylinder power in the blended zone 107 is greater than 1.0 Diopter. In contrast, it is noted from Figure 8B that for the embodiment of the quasi progressive lens, the residual cylinder power in the transition zone 113 is less than 0.5 Diopter. Accordingly, the quasi progressive lens can have greater visual acuity along the convergence path than the blended bifocal lens.

Various embodiments of quasi progressive lenses described herein can also provide several benefits over progressive lenses. For example, a quasi progressive lens can provide larger and cleaner first and second optical zones 101 and 103 as compared to a progressive lens. For example, in various embodiments of a quasi progressive lens providing an optical addition power greater than or equal to 1.75 Diopter, the size of the first optical zone 101 (or far vision zone) as characterized by the horizontal width through the fitting point where the maximum residual cylinder power or aberrations is below a threshold (e.g., 0.5 Diopter) can be between about 30 mm and about 70 mm. In various embodiments, for certain addition powers, the size of the first optical zone 101 can be approximately equal to full width of the lens. In contrast, in various embodiments of a progressive lens providing the same optical addition power greater than or equal to 1.75 Diopter, the size of the first optical zone 101 as characterized by the horizontal width through the fitting point where the maximum residual cylinder power or aberrations is below a threshold (e.g., 0.5 Diopter) is less than 20 mm. More particularly, as shown in Table 2 below, in various implementations of quasi progressive lenses, the width of the second optical zone 103 having certain addition power for providing near vision and maximum residual cylinder power or aberrations below a threshold (e.g., 0.5 Diopter) can be about 1.5 times to about 5 times larger than the second optical zone 103 (or near vision zone) having the same addition power and maximum residual cylinder power or aberrations below a threshold (e.g., 0.5 Diopter) in various implementations of progressive lenses. The increase in the width of the second optical zone 103 can advantageously provide a patient with a larger area through which to view objects at near distance using various implementations of quasi progressive lenses with a certain addition power as compared various implementations of progressive lenses with the same addition power.

The increase in the width of the second optical zone 103 having a certain addition power for various embodiments of quasi progressive lenses with respect to a width of the second optical zone 103 having a comparable addition power for various embodiments of progressive lenses can be attributed to the decreased width of the transition zone 113 of the quasi progressive lens as compared to the width of the corridor 111 of a progressive lens. In comparison to the corridor 111 of an embodiment of a progressive lens, the transition zone of an embodiment of a quasi progressive lens can be significantly shorter and narrower.

The reduced length of the transition zone 113 also enables less movement of the gaze from the first optical zone 101 to reach the second optical zone 103 in comparison to embodiments of progressive lenses. This reduction in travel can decrease the time required by a patient's eye to transition from a distant viewing state to a near viewing state and allow viewing near objects at more ergonomic angles of gaze.

One feature of the quasi progressive lens results from the short length of the transition zone 113. To produce the change in power from the first zone 101 to the second optical zone 103 over the short length entails a higher power gradient than for a conventional progressive lens. Table 1 below provides the minimum vertical power gradient along the convergence path for various values of optical addition power for an embodiment of a quasi progressive lens. As a consequence, in contrast to embodiments of progressive lenses, objects at intermediate distances cannot be viewed comfortably through the transition zone 113 due to the reduced spatial dimensions of the transition zone 113 and high optical power gradients in the transition zone 113. As noted from Table 1 below, the minimum vertical power gradient along the convergence path increases as the optical addition power increases. For example for an optical addition power of 0.75 Diopter, the minimum vertical power gradient is about 0.08 Diopter/mm. As another example for an optical addition power of 4.0 Diopter, the minimum vertical power gradient is about 0.44 Diopter/mm. The optical addition power and the minimum vertical gradient can include values between the values set forth in Table 1 below. Accordingly, various embodiments may include ranges established by any of these values. For example, for a lens with an add power of 1.0 to 1.25 Diopters, the minimum power gradient can be from 0.11 to 0.14 Diopters/mm. As another example, for a lens with an add power of 1.25 to 1.5 Diopters, the minimum power gradient can be from 0.14 to 0.17 Diopters/mm. As yet another example, for a lens with an add power of 1.5 to 1.75 Diopters, the minimum power gradient can be from 0.17 to 0.19 Diopters/mm. As another example, for a lens with an add power of 2.0 to 2.25 Diopters, the minimum power gradient can be from 0.22 to 0.25 Diopters/mm. As another example, for a lens with an add power of 2.25 to 3.25 Diopters, the minimum power gradient can be from 0.25 to 0.33 Diopters/mm. As another example, for a lens with an add power of 3.25 to 4.0 Diopters, the minimum power gradient can be from 0.33 to 0.44 Diopters/mm.

**Table 1: Minimum vertical power gradient along the convergence path in Diopter/mm for various values of optical addition power.**

| Optical Addition power [Diopter] | Minimum vertical gradient along the convergence path [Diopter/mm] |
|---|---|
| 0.75 | 0.08 |
| 1 | 0.11 |
| 1.25 | 0.14 |
| 1.5 | 0.17 |
| 1.75 | 0.19 |
| 2 | 0.22 |
| 2.25 | 0.25 |
| 2.5 | 0.28 |
| 2.75 | 0.31 |
| 3 | 0.33 |
| 3.25 | 0.36 |
| 3.5 | 0.39 |
| 3.75 | 0.42 |
| 4 | 0.44 |

Table 2 below presents a comparison of various parameters of three different realizations of quasi progressive lenses with a comparative example of a progressive lens. The comparative example of a progressive lens is an extremely short progressive lens with a corridor length of 11 mm (e.g., Shamir Autograph II^{™} 11). The first realization of the quasi progressive lens does not fall under the scope of the claimed invention and has a near vision zone size of about 20 mm and a transition zone length of about 10 mm. The second embodiment of the quasi progressive lens has near vision zone size of about 20 mm and a transition zone with a length of about 7 mm. The third embodiment of the quasi progressive lens has a near vision zone size of about 15 mm and a transition zone with a length of about 5 mm. For the sake of comparison, the realizations of the progressive lens and the quasi progressive lenses have a far vision power prescription of zero. Accordingly, the realizations of the progressive lens and the quasi progressive lenses can be considered as planar lens at the first optical zone (or far vision zone). The realizations of the progressive lens and the quasi progressive lens, are considered to have a base power of about 4.0 Diopter and addition powers of about 1.0 Diopter, about 2.0 Diopter, and about 3.0 Diopter.

The corridor length of the progressive lens and the length of the transition zone of the embodiments of the quasi progressive lens are measured along the convergence path starting from the lowest point below the fitting point where the addition power has a value of 0.1 Diopter to a point along the convergence path in the near vision zone having an addition power equal to the maximum addition power minus 0.1 Diopter. The corridor width of the progressive lens and the width of the transition zone of the embodiments of the quasi progressive lens are measured for two different aberration thresholds. In Table 2 below the values of the width for the corridor and the transition zone provided within parenthesis are measured within an aberration threshold of about 0.5 Diopter. In Table 2 below the values of the width for the corridor and the transition zone that are provided without parenthesis are measured within an aberration threshold of about 1.0 Diopter. The far vision zone sized is characterized by the horizontal width of the far vision zone passing through the fitting point (FP) where the residual cylinder power is less than 0.5 Diopter. The near vision zone size is characterized by the horizontal width of a line passing through the near reference point (NRP) where the addition power is not less than the maximum addition power (e.g., 1.0 Diopter, 2.0 Diopter or 3.0 Diopter) minus 0.25 Diopter. According to the invention, the near vision zone size is characterized by the width through the centroid of an area of the second optical zone 103 (or near vision zone) where the addition power is not less than the maximum addition power (e.g., 1.0 Diopter, 2.0 Diopter or 3.0 Diopter) minus 0.25 Diopter. The maximum residual cylinder corresponds to the maximum cylindrical aberrations in the peripheral zones 109. The various parameters set forth below such as corridor/transition zone width, far vision zone size, near vision zone size, addition power and maximum residual cylinder power can include values between the values set forth in Table 2 below. Accordingly, various embodiments may include ranges established by any of these values.

**Table 2: Comparison of various parameters of three different embodiments of quasi progressive lenses with an embodiment of a progressive lens.**

| Design: | | Progressive, extreme short Autograph II^{™} | Quasi Progressive, 20 mm segment | Quasi Progressive, 20 mm segment | Quasi Progressive, 15 mm segment |
|---|---|---|---|---|---|
| Corridor / Transition zone Length [mm] | | 11 | 10 | 7 | 5 |
| Addition 1 [Diopter] | Corridor / Transition zone Width [mm] | N.A. (40.6) | 6.7 (2.9) | 4.4 (2.2) | 5.4 (2.5) |
| | Far Vision Zone Size [mm] | 40.6 | 62.5 | 54.5 | 48.4 |
| | Near Vision Zone Size [mm] | 10 | 30 | 24 | 17 |
| | Maximum Residual Cylinder [D] | 0.90 | 2.84 | 2.99 | 2.37 |
| Addition 2 [Diopter] | Corridor / Transition zone Width [mm] | 4.4 (2.0) | 3.3 (2.0) | 2.2 (1.0) | 2.4 (1.0) |
| | Far Vision Zone Size [mm] | 7.8 | 44.5 | 44.6 | 39.9 |
| | Near Vision zone Size [mm] | 8 | 28 | 22 | 15 |
| | Maximum Residual Cylinder [D] | 1.90 | 5.71 | 5.94 | 4.76 |
| Addition 3 [Diopter] | Corridor / Transition zone Width [mm] | 2.6 (1.1) | 2.1 (1.2) | 1.7 (0.7) | 1.5 (0.0) |
| | Far Vision Zone Size [mm] | 5.0 | 55.6 | 38.4 | 33.8 |
| | Near Vision zone Size [mm] | 5 | 27 | 20 | 14 |
| | Maximum Residual Cylinder [Diopter] | 2.87 | 8.56 | 8.09 | 7.15 |

It is noted from Table 2, that for all values of addition powers (e.g., 1.0 Diopter, 2.0 Diopter or 3.0 Diopter) the width of the corridor for the comparative example of the progressive lens is significantly wider than the width of the transition zone for any of the three embodiments of quasi progressive lenses. It is further noted that the comparative example of the progressive lens has a much smaller near vision zone size than the three realizations of quasi progressive lenses. Accordingly, the optical zone that provides near vision for the three realizations of the quasi progressive lens is larger than the optical zone that provides near vision for the comparative example of the progressive lens.

The residual cylinder power in the peripheral regions of the lens depend on the length of the transition zone. Shortening the length of the transition zone can increase the residual cylinder power in the periphery. This effect is observed from Table 2, where the maximum residual cylinder in the periphery has a reduced value for the comparative example of the progressive lens at all values of addition power as compared to the three realizations of the quasi progressive lens. The width of the transition zone for a given length of the transition zone can also affect the maximum residual cylinder. For example, a wider transition zone can increase the maximum residual cylinder as explained in further detail with reference to Figures 9A and 9B.

As discussed above, a short transition zone can lead to high power gradients in the transition zone which can cause visual distortions when the gaze shifts between distance vision and the near vision. Thus, by virtue of its length, the transition zone is optically non-functional for most patients in that it does not allow comfortably viewing objects through the transition zone. In various embodiments of quasi progressive lenses, objects at intermediate distances viewed through the transition zone may appear distorted, blurred, unclear, and/or unresolved. As discussed above with reference to Figure 6A and 6B, the width of the transition zone is given by the distance between two points of the peripheral region that have residual cylinder power or aberrations less than an aberration threshold. In various embodiments, the aberration threshold can be less than or equal to about 0.125 Diopter, less than or equal to about 0.25 Diopter, less than or equal to about 0.5 Diopter, less than or equal to about 0.75 Diopter or less than or equal to about 1 Diopter.

As discussed above, reducing the width of the transition zone can reduce the residual cylinder power or aberrations in the peripheral regions as shown in Figures 9A and 9B. Figure 9A illustrates variation in the optical addition power and the residual cylinder power in various optical zones for an embodiment of a quasi progressive lens with a narrow corridor. Figure 9B illustrates variation in the optical addition power and the residual cylinder power in various optical zones for an embodiment of a quasi progressive lens with a wide corridor. The width of the corridor of the embodiment illustrated in Figure 9A is 1.1 mm while the width of the corridor of the embodiment illustrated in Figure 9B is 2.2 mm.

Table 3 presents a comparison of two quasi progressive lenses with no sphere and cylinder power and 2 Diopters addition power in the near segment, front base of 4 [D], and refraction index of 1.6. The first lens has a corridor width of 1.1 mm and the second has a corridor width of 2.2 mm, where the corridor width is defined where the cylindrical aberration in the transition zone are less than 0.5 Diopters. It is noted from Table 3 and Figure 9A that the embodiment with the narrow corridor has cylindrical aberration less than 0.5 Diopters. The residual cylinder power at the fitting point (FP) and at the near measuring point (NMP) are 0.02 and 0.05 Diopters, respectively. It is noted from Table 3 and Figure 9B that the embodiment with the wider corridor has cylindrical aberration less than 0.5 Diopters. The residual cylinder power at the FP and at the NMP are 0.05 and 0.12 Diopters, respectively. Accordingly, the embodiment with the narrow corridor has lesser residual cylinder power at the FP and at the NMP as compared to the embodiment with the wider corridor. As discussed above, the short and narrow transition zone is not designed to be optically functional, and therefore it can have high power gradients, especially in high addition prescriptions (e.g. above 2 diopters). In contrast, an optically functional area should have stable optical properties, with less than 0.5 diopter optical power differences within a pupil diameter.

**Table 3: Comparison of two quasi progressive lenses with different corridor widths.**

| Corridor Width [mm] | Residual Cylinder [D] | |
|---|---|---|
| | Fitting Point FP (0 mm, 0 mm) | Near Measuring Point NMP (-1.5 mm, -13 mm) |
| 1.1 | 0.02 | 0.05 |
| 2.2 | 0.05 | 0.12 |

The dimensions of the corridor can depend on the spherical power and/or the add power provided by the far/near vision zones. Figure 10A, 10B and 10C illustrate the variation in the corridor width for different amounts of spherical and/or add power provided by the far/near vision zones. Figure 10A illustrates an implementation of a quasi progressive lens with far sphere power of 3 Diopters and add power of 2 Diopters. Figure 10B illustrates an implementation of a quasi progressive lens with far sphere power of 3.75 Diopters and add power of 1.25 Diopters. The far power provided by the quasi progressive lens of Figure 10B is equivalent to the intermediate vision distance (mid-range) power provided by the quasi progressive lens of Figure 10A at a distance of 0.8 m. Figure 10C illustrates an implementation of a quasi progressive lens with far sphere power of 3 Diopters and add power of 0.75 Diopters. The near power provided by the quasi progressive lens of Figure 10C is equivalent to the intermediate vision distance (mid-range) power provided by the quasi progressive lens of Figure 10A at a distance of 0.8 m. A comparison of Figures 10A - 10C suggests that since the add power provided by the quasi progressive lens of Figures 10B and 10C is smaller than the add power provided by the quasi progressive lens of Figure 10A, the corridor can be wider in the quasi progressive lens of Figures 10B and 10C while the peripheral aberrations can be reduced.

The first optical zone 101, the second optical zone 103, the transition zone 113 and the peripheral zones 109a and 109b can be disposed on a surface of a lens blank. The lens blank can have a rotationally symmetric convex surface and a concave surface opposite the convex surface. In various implementations, the rotationally symmetric convex surface can be spherical having a constant radius of curvature. In some implementations, the rotationally symmetric convex surface can be an aspheric surface. The first optical zone 101, the second optical zone 103, the transition zone 113 and the peripheral zones 109a and 109b can be disposed entirely on the convex surface, entirely on the concave surface or partly on the convex surface and partly on the concave surface using freeform manufacturing technology. Certain lenses, for example, have a rotationally symmetric front surface or spherical front surface and the rear surface has correction for far and near distances. The rear surface, in such cases, may be non-rotationally symmetric. Freeform manufacturing technology can also be referred to as direct or digital surfacing and is capable of producing complex surface shapes. Forming the first optical zone 101, the second optical zone 103, the transition zone 113 and the peripheral zones 109a and 109b on one or more surfaces of the lens blank includes generating the desired lens surface that will provide the prescription spherical, cylindrical and progressive optical powers using a three-axis, computer numerically controlled (or CNC) generator. Computer controlled cutting tools are then employed to produce the desired lens surface with a high degree of accuracy and smoothness. In various implementations, the worked surface or surfaces of the lens including the first optical zone 101, the second optical zone 103, the transition zone 113 and the peripheral zones 109a and 109b can be polished. In various implementations, the radius of curvature of the worked surface or surfaces of the lens can vary at least in the first optical zone 101 and the second optical zone 103, for example, to reduce residual aberration. In an embodiment the residual aberration in the peripheral zones 109a and 109b can be reduced by 20% to 50% by varying the radius of curvature by 2 to 50 micron or by 3 to 35 micron or by 3 to 15 micron. The lens obtained after disposing the first optical zone 101, the second optical zone 103, the transition zone 113 and the peripheral zones 109a and 109b on one or both surfaces of the lens blank can be referred to as the worked lens. This disclosure contemplates that the worked lens can include a rotationally symmetric convex surface and a concave surface including the first optical zone 101, the second optical zone 103, the transition zone 113 and the peripheral zones 109a and 109b. This disclosure contemplates that the rotationally symmetric convex surface of the worked lens is a part of a sphere and has constant radius. This disclosure also contemplates that the rotationally symmetric convex surface of the worked lens is aspheric.

In implementing freeform technology, in various embodiments, a surface grid resolution is determined for designing and manufacturing the lens. The size of the surface grid elements can affect the accuracy of the features formed on the surface. For example, a finer grid obtained by decreasing the size of the grid elements can increase the accuracy of the features formed on the surface. In contrast, a coarser surface grid obtained by increasing the size of the grid elements may reduce the accuracy of the features formed on the surface. However, a coarser grid may shorten design and/or production time and may be more cost effective from a manufacturing standpoint. For example, a grid resolution of 1 mm can be sufficient for the spatial frequency required for the optical features of quasi progressive lenses. Since, the size of the features of quasi progressive lenses are generally of the same order as the size of the features of progressive lenses, the embodiments of quasi progressive lenses described herein can be manufactured on the freeform machinery in the manufacturing labs using the same manufacturing profiles and parameters used for producing progressive lenses. Manufacturing quasi progressive lenses using freeform technology can also provide significant reduction in manufacturing time and costs as compared to manufacturing blended bifocal lenses since blended bifocal designs have smaller/sharper optical features in the blending zone as compared to the optical features of quasi progressive lenses.

This disclosure contemplates that the shape of the lens, such as, for example, the shape of the rear surface and/or front surface of the lens can be determined from a prescription received from a ECP (eye care professional). The prescription can include the optical powers (e.g., spherical and cylinder power) that provide distance or intermediate distance vision correction. The prescription can further include additional power that may be needed for near vision, mono far pupillary distance (PD), fitting height (FH) (measured from the center of the pupil to the lower rim of the frame), frame width, frame height, and DBL (Distance Between Lens), trace data or any combination thereof. The prescription can also include prism correction if needed, both at the far zone, and at the near zone relative to the far prism correction, or no prism in the far zone however additional prism correction in the near zone if needed and the frame type. The shape of the rear surface and/or front surface of the lens can be determined using a computer implemented method and includes determining a size and/or shape of the clean far/intermediate zone, a size and/or shape of the clean near vision/intermediate zone, length and width of the transition region or corridor. The computer implemented method may be configured to optimize the sizes and/or shape of the various regions of the lens (e.g., far, near, transition region) such that the resulting lens provides the prescribed prescription power with reduced aberrations. The computer implemented method may be configured to determine a length and width as well as shape of the transition region such that the resulting lens is a quasi progressive lens having the properties discussed herein. The determined shape of the lens can be used to shape, for example, the rear surface of a lens blank using freeform manufacturing technology. Accordingly, the lens design that provides the prescribed spherical, cylindrical and prism powers for quasi progressive lenses can be obtained using software methods and reproduced on one or more surfaces of a lens blank with available freeform manufacturing equipment.

### Example Embodiments of a Quasi Progressive Lens

As discussed above, various embodiments of a quasi progressive lens can include a first optical zone disposed in the upper portion of a surface (e.g., forward or rearward) of the lens, a second optical zone disposed in the lower portion of the same surface and a short and narrow transition zone connecting the first and second optical zone. This disclosure contemplates that the first optical zone, the second optical zone and the transition zone are disposed on the rearward surface of the lens. In such implementations, the rearward surface of the lens can be a concave surface and the forward surface can be a rotationally symmetric convex surface. As discussed above, the rotationally symmetric convex surface can be either a spherical surface with constant radius of curvature or an aspheric. The clean first optical zone and the clean second optical zone can have a varying radius of curvature so as to reduce residual cylinder and associated distortions. The body of the lens can comprise a variety of optical materials including but not limited to CR-39, Trivex, 1.56, SuperLite 1.60, SuperLite 1.67, Polycarbonate, and SuperLite 1.74. Other optical materials can also be used. The body of the lens can be subject to a variety of pre-treatments including but not limited to Clear^{™}, Transitions^{™} VI and VII (Gray, Brown), Transitions XtrActive^{™}, Transitions Vantage^{™}, Polarized (Gray, Brown) and Drivewear^{™}. The lens body can comprise tints or coating (e.g., hard anti-scratch coating, anti-reflection coating, etc.).

The first optical zone is configured to provide far or distance vision, such as, for example, at distances beyond about 20 feet. In various embodiments, the first optical zone can be configured to provide intermediate distance vision, such as, for example, at distances between about 0.61 m (2 feet) and about 6.1 m (20 feet). The first optical zone can have a spherical power range between about -20 Diopter and about 20 Diopter to correct for refractive errors in a patient's eye. In addition, the first optical zone can have a cylinder power in the range between about -10 Diopter to about 0 Diopter or 0 Diopter to about +10 Diopter to correct for astigmatic errors in the patient's eye. The first optical zone can also include an area having a residual cylinder power or aberrations less than or equal to about 0.25 Diopter, less than or equal to about 0.12 Diopter, less than or equal to about 0.06 Diopter and/or less than or equal to about 0.03 Diopter. The width of the first optical zone can vary between about 20 mm to about 70 mm depending on the surface area of the lens body, the width and height of the frame selected by the patient and the patient's facial structure and other physical characteristics. In various embodiments, the width of the first optical zone can be greater than or equal to 50 mm, greater than or equal to 40 mm or greater than or equal to 30 mm. In various embodiments, the width of the first optical zone can include the full width of the lens. The first optical zone can be located between about 6 degrees below the fitting point to about 30 degrees above the fitting point. For example, in various embodiments, the first optical zone can be located between about 3 degrees above the fitting point and about 20 degrees above the fitting point. As another example, in various embodiments, the first optical zone can be located between about 2 degrees below the fitting point and about 25 degrees above the fitting point. In various embodiments, the bottom (or lower portion) of the first optical zone can be located below the fitting point. For example, the bottom (or lower portion) of the first optical zone can extend up to about 6 mm below the fitting point. In various embodiments, the bottom (or lower portion) of the first optical zone can be located between about 2 mm to about 3 mm below the fitting point.

The second optical zone is configured to provide near vision, such as, for example, at distances of about 40.64 cm (16 inches). In various embodiments, the second optical zone can be configured to provide intermediate distance vision, such as, for example, at distances between about 0.61 m (2 feet) and about 6.1 m (20 feet). In various embodiments, the second optical zone can be disposed nasally on the surface of the lens. The second optical zone can have a variety of shapes such as, for example, circular, elliptical, D shape (with or without rounded edges), etc. The second optical zone can have an additional spherical power in the range between greater than 0 or .25 Diopter to about 4 Diopter relative to the spherical power provided by the first optical zone. The second optical zone can also include an area having a residual cylinder power or aberrations less than or equal to about 0.25 Diopter, less than or equal to about 0.12 Diopter, less than or equal to about 0.06 Diopter and/or less than or equal to about 0.03 Diopter. According to the invention, the width of the second optical zone is between 12 mm and 24 mm. In various embodiments, a nominal addition power of about 0.01 Diopter, 0.03 Diopter, 0.06 Diopter, 0.1 Diopter or 0.25 Diopter is reached at a distance between about 4 mm and about 20 mm below the fitting point. For example, a nominal addition power can be reached at a distance of about 10 mm below the fitting point in some embodiments. In various embodiments of quasi progressive lenses a portion of the region having the maximum addition power can be along the convergence path.

The width of the lens can be, for example, from 20 to 80 mm such as for example, from 20 to 30 mm, from 30 to 40 mm, from 40 to 50 mm, from 50 to 60 mm, from 60 to 70 mm or from 70 to 80 mm, or any range formed by any combination of these ranges (e.g., from 60 to 80, from 50 to 70 mm, from 40 to 60 mm, from 30 to 50 mm, from 30 to 60 mm, from 40 to 70 mm, from 30 to 70 mm, from 30 to 80 mm, from 40 to 80 mm, or from 50 to 80 mm, etc). Widths outside these ranges are also possible.

The height of the lens can be, for example, from 20 to 60 mm such as for example, from 20 to 30 mm, 30 to 40 mm, 40 to 50 mm, 50 to 60 mm, or any range formed by any combination of these ranges. Heights outside these ranges are also possible.

The transition zone connecting the first and second optical zones according to the invention has a length between 4mm and 8mm. For example, a length of the transition zone can be between about 5 mm and about 8 mm. The width of the transition zone with a threshold residual cylinder power less than 1.0 Diopter can be less than or equal to about 4 mm. The width of the transition zone with a threshold residual cylinder power less than 0.75 Diopter can be less than or equal to about 3 mm. The width of the transition zone with a threshold residual cylinder power less than 0.5 Diopter can be less than or equal to about 2 mm. The width of the transition zone with a threshold residual cylinder power less than 0.25 Diopter can be less than or equal to about 1 mm. The transition zone includes an area having a residual cylinder power or aberrations less than or equal to about 0.5 Diopter, less than or equal to about 0.25 Diopter and/or less than or equal to about 0.12 Diopter.

As yet another example, the length of the transition zone for a lens providing an addition power greater than about 0.5 Diopter (e.g., any one of the ranges between 0.75 Diopter to about 1.5 Diopter, between 1.75 Diopter to about 2.5 Diopter or between 2.75 Diopter to about 4.0 Diopter) can be about 4mm, 5 mm, 6 mm, 7 mm, 8mm, as well as values in between any combination of these lengths.

As another example, the width of the transition zone with a threshold residual cylinder power less than any of 0.5 Diopter, 1.0 Diopter or 1.25 Diopter for a lens providing an addition power of 0.5 Diopter (e.g., any one of the ranges between 0.75 Diopter to about 1.5 Diopter, between 1.75 Diopter to about 2.5 Diopter or between 2.75 Diopter to about 4.0 Diopter) can be about 0.5 mm, 1 mm, 2 mm, 3 mm, 4 mm as well as values in between any combination of these widths.

As another example, the maximum residual cylinder power in the peripheral zone can be about 1.5 Diopter, 2.0 Diopter, 2.5 Diopter, 3.0 Diopter, 4.0 Diopter, 5.0 Diopter, 6.0 Diopter, 7.0 Diopter, 8.0 Diopter, 9.0 Diopter, 10.0 Diopter, 11.0 Diopter, 12.0 Diopter, etc. as well as values in between any combination of maximum residual cylinder powers. According to the invention, the residual cylinder power in the peripheral zone is greater than 2.0 Diopter, 2.5 Diopter, 3.0 Diopter, 4.0 Diopter, 5.0 Diopter, 6.0 Diopter, 7.0 Diopter, 8.0 Diopter, 9.0 Diopter, 10.0 Diopter or 11.0 Diopter.

### QUASI BI-PRISM LENS

In some patients, the image of an object formed by one eye may be displaced horizontally or vertically with the image of the object formed by the other eye. Such patients may need lenses with prismatic power that can align the images obtained by the two eyes in the horizontal and/or vertical direction. Prism correction can be prescribed for far, midrange (intermediate) and/or near vision. Patients who suffer from syndromes such as divergence excess, divergence insufficiency, convergence excess, convergence insufficiency, etc. may be prescribed with horizontal prismatic correction between far and near vision. In patients suffering from anisometropia, in which the two eyes have unequal refractive power, a vertical prismatic difference is created between the two eyes of the patient while gazing below the optical center of the lens. For such patients, a vertical prismatic correction between the far and near vision may be prescribed. A class of ophthalmic lenses that can provide prismatic correction includes bi-prism lenses that comprise a first prismatic section that provides a first prism power and a second prismatic section that provides a second prism power. Bi-prism lenses available in the market may be formed by joining the two prismatic sections (e.g., by gluing) such that there is a visible step between the two prismatic sections. The step between the two prismatic sections can be aesthetically unappealing. Furthermore, as the patient's gaze moves from the first prismatic section to the second prismatic section, the presence of the step can cause unwanted optical aberrations that can reduce visual quality and cause vision discomfort. This disclosure contemplates that the first and the second prismatic sections are joined without a visible dividing line such that the first and the second prismatic sections are smoothly blended.

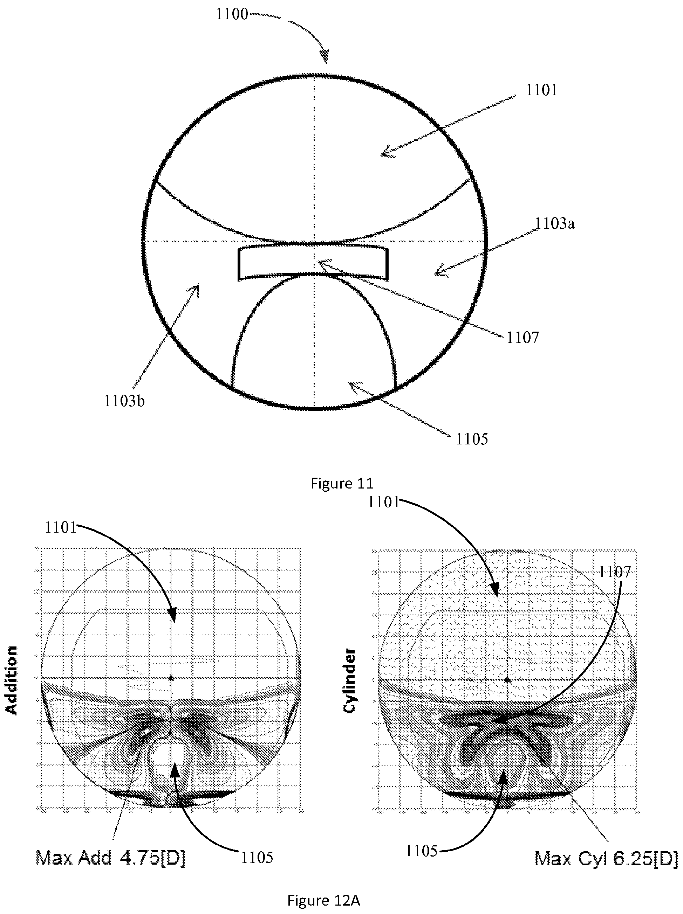

Figure 11 illustrates an implementation of an optical lens 1100 that includes a prismatic segment that provides additional prism power. The optical lens 1100 includes four optical zones: a first optical zone 1101, a second optical zone 1105 including a prismatic segment having a prism, a transition zone 1107 and one or more (e.g., two) peripheral zones 1103a and 1103b. According to the claimed invention, the first zone 1101 is a far vision zone with or without prescribed prism power. The second zone 1105 is a near vision zone that provides additional prism power different from the prism power provided by the first zone 1101. The prism power can vary across the length of the transition zone 1107. In various implementations, the prism power can increase across the length of the transition zone 1107 as the patient's eye moves from the first zone to the second zone along the convergence path. For example, a magnitude of the prism power along the vertical direction can increase across the length of the transition zone 1107 as the patient's eye moves from the first zone to the second zone along the convergence path. The prism power gradient across the length of the transition zone 1107 can cause high cylindrical aberration such that it does not allow for comfortable gazing through the transition zone 1107. According to the invention, the transition zone 1107 has an area having a residual cylinder power or aberrations less than or equal to 0.5 Diopter and can have a maximum residual cylinder power that is more than approximately two diopters per prism power in the second zone 1105 in prism diopters. For example, if the second zone has a prism power of about 0.5 prism Diopter, then the transition zone 1107 can have maximum residual cylinder power that is greater than about 1.0 Diopter. The cylindrical aberrations in the transition zone 1107 can be along the convergence path of the patient's eye.

This disclosure contemplates that the transition zone 1107 can have a maximum residual cylinder power that is more than approximately three, four, five, six, seven, eight, nine, or ten diopters per prism power in the second zone 1105 in prism diopters. The maximum residual cylinder power in the transition zone 1107 can be along the convergence path of the patient's eye. This disclosure contemplates that the maximum residual cylinder power in the transition zone 1107 can be between 0.5 Diopter and 12 Diopter. For example, the maximum residual cylinder power in the transition zone 1107 can be greater than or equal to 0.5 Diopter and less than or equal to 12.0 Diopter, greater than or equal to 1.0 Diopter and less than or equal to 11.0 Diopter, greater than or equal to 2.0 Diopter and less than or equal to 10.0 Diopter, greater than or equal to 3.0 Diopter and less than or equal to 9.0 Diopter, greater than or equal to 4.0 Diopter and less than or equal to 8.0 Diopter, greater than or equal to 5.0 Diopter and less than or equal to 7.0 Diopter, or have values in between. In various implementations, the vertical prism power gradient across the length of the transition zone 1107 (e.g., along the convergence path) can be in a range between 0.12 prism Diopter/mm per prism power in the second zone 1105 in prism Diopters, and 1.0 prism Diopter/mm per prism power in the second zone 1105 in prism Diopters. For example, if the second zone has a prism power of about 0.5 prism Diopter, then the prism power gradient across the length of the transition zone 1107 can be between 0.06 prism Diopter/mm and 0.5 prism Diopter/mm. Without any loss of generality, the optical lens 1100 described above can be referred to as a quasi bi-prism lens.

The quasi bi-prism lenses described herein provide an ophthalmic solution that offers the user improved vision at near and far distances while increasing the aesthetic appearance of the lens and reducing unwanted optical aberrations as the patient's gaze traverses from far vision to near vision. Various embodiments disclosed herein include a quasi bi-prism ophthalmic solution (such as, for example, lens blanks, eyeglass lenses, and glasses for eyewear) that include a short and/or narrow transition zone 1107 between the first optical zone 1101 and the second optical zone 1105. As discussed above, the transition zone 1107 can have large amounts of residual cylinder power and/or prism power gradient such that objects at intermediate distances cannot be viewed or gazed comfortably through the transition zone 1107. In various implementations of the quasi bi-prism ophthalmic solution, the transition zone 1107 can be optically non-functional such that objects at intermediate distances appear blurred, distorted and/or unclear. In some instances, objects at intermediate distances cannot be resolved when viewed through the optically non-functional transition zone 1107.

This disclosure contemplates that the first zone 1101 can be configured as a clean far zone or a clean intermediate vision zone with residual cylindrical power less than a threshold. The threshold is 0.25 Diopters according to the claimed invention, and can be 0.12, 0.06 or 0.03 diopters. Accordingly, the first zone 1101 can have residual cylindrical power less than 0.25, 0.12, 0.06 or 0.03 diopters. The first zone can have spherical power to correct for refractive errors. The first zone 1101 can also have a prismatic segment including a prism that can provide additional prism power. For example, the first zone 1101 can be configured to provide 0 - 5 prism Diopters of additional prism power. The second zone 1105 can include a clean prismatic segment with residual cylindrical power less than a threshold. For example, the second zone 1105 can have residual cylindrical power less than 0.25, 0.12, 0.06 or 0.03 diopters. The second zone 1105 can also have spherical power to correct for refractive errors. In various implementations, the prism in the first zone 1101 and/or the second zone 1105 can be aligned along a horizontal axis such that when worn by a patient its base is turned nasally (referred to base in) or temporally (referred to as base out). In some implementations, the prism in the first zone 1101 and/or the second zone 1105 can be aligned along a vertical axis such that when worn by a patient its base is turned towards the forehead (referred to base up) or towards the chin (referred to as base down). In some implementations, the prism in the first zone 1101 and/or the second zone 1105 can be aligned along an axis that is neither vertical nor horizontal but instead. In such implementations, the prism can be considered to be aligned along a skew axis.

Figure 12A illustrates variation in the addition power and the residual cylinder power in various optical zones for an implementation of a quasi bi-prism lens including a prismatic section in the second optical zone 1105. The prism in the prismatic section is aligned along the horizontal axis of the lens with its base turned nasally (base in) and provides 1 prism Diopter of prismatic add power. As seen from the left panel of Figure 12A, the transition region 1107 has additional power of about 4.75 Diopters. The right panel of Figure 12A shows that the maximum residual cylinder power in the transition region 1107 is about 6.25 Diopter.

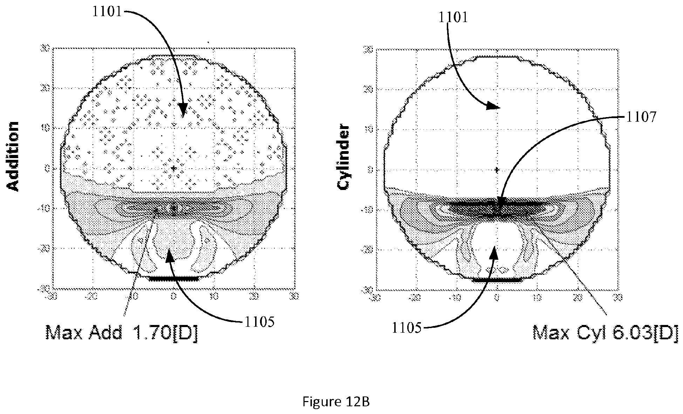

Figure 12B illustrates variation in the addition power and the residual cylinder power in various optical zones for an implementation of a quasi bi-prism lens including a prismatic section in the second optical zone 1105. The prism in the prismatic section is aligned along the vertical axis of the lens with its base turned towards the chin (base down) and provides 1 prism Diopter of prismatic add power. As seen from the left panel of Figure 12B, the transition region 1107 has additional power of about 1.70 Diopters. The right panel of Figure 12B shows that the maximum residual cylinder power in the transition region 1107 is about 6.03 Diopter.

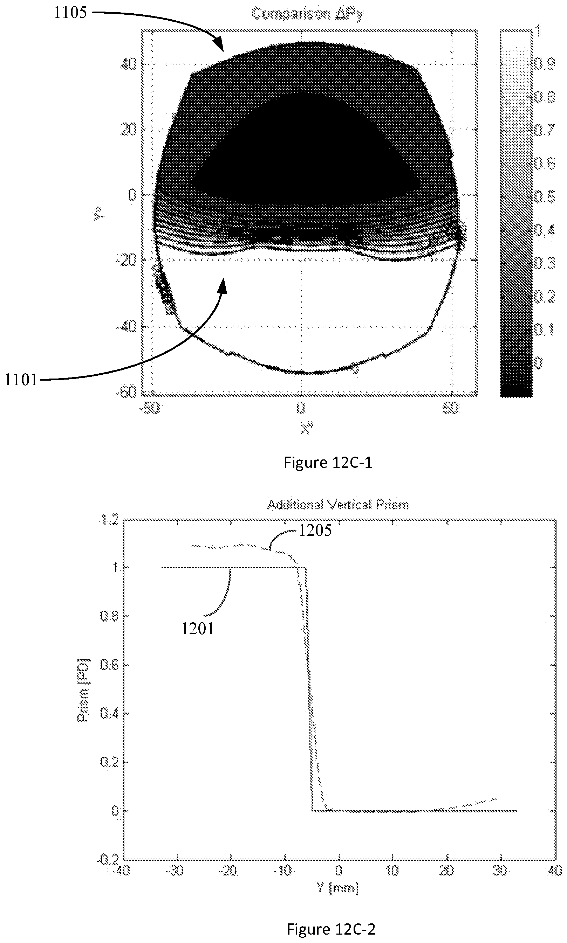

Figure 12C-1 illustrates a contour map of the vertical prism power (e.g, prism power along the vertical direction) across the surface of an embodiment of a quasi bi-prism lens including a prismatic segment with a prism aligned with the vertical axis with the base of the prism disposed upward (base-up). The prismatic segment is included in the second optical zone 1105 and provides 1.0 prism Diopter of prismatic power. The first optical zone is configured to provide 0 prism Diopter of prismatic power. Figure 12C-2 illustrates the variation in the prism power across the first optical zone 1105 and the second optical zone 1101. The curve 1201 indicates an ideal step function as the prism power transitions from 0 prism Diopter in the first optical zone and 1.0 prism Diopter in the second optical zone. The curve 1205 illustrates the transition in prism power from the first optical zone to the second optical zone as obtained by using a lens design software. It is noted from Figure 12C-2 that the variation in the prism power follows the ideal step function closely. Furthermore, the prism power changes from 1 prism Diopter to 0 prism Diopter within a distance less than 5 mm. Thus, the prism power gradient in the transition zone is sufficiently large such that a person is not able to gaze comfortably through the transition zone, as discussed above.

The quasi bi-prism lenses described herein can be manufactured using freeform technology. As discussed above, the first optical zone 1101, the second optical zone 1105, the transition zone 1107 and the peripheral zones 1103a and 1103b can be disposed on a surface of a lens blank. The lens blank can have a rotationally symmetric convex surface and a concave surface opposite the convex surface. In various implementations, the rotationally symmetric convex surface can be spherical having a constant radius of curvature. In some implementations, the rotationally symmetric convex surface can be an aspheric surface. The first optical zone 1101, the second optical zone 1105, the transition zone 1107 and the peripheral zones 1103a and 1103b can be disposed entirely on the convex surface, entirely on the concave surface or partly on the convex surface and partly on the concave surface using freeform manufacturing technology. Certain lenses, for example, have a rotationally symmetric front surface or spherical front surface and the rear surface has correction for far and near distances. The rear surface, in such cases, may be non-rotationally symmetric. Forming the first optical zone 1101, the second optical zone 1105, the transition zone 1107 and the peripheral zones 1103a and 1103b on one or more surfaces of the lens blank includes generating the desired lens surface that will provide the prescription spherical, cylindrical and prism powers using a three-axis, computer numerically controlled (or CNC) generator. Computer controlled cutting tools are then employed to produce the desired lens surface with a high degree of accuracy and smoothness. This disclosure contemplates that the worked lens can include a rotationally symmetric convex surface and a concave surface including the first optical zone 1101, the second optical zone 1105, the transition zone 1107 and the peripheral zones 1103a and 1103b. This disclosure contemplates that the rotationally symmetric convex surface of the worked lens is a part of a sphere and has constant radius. This disclosure also contemplates that the rotationally symmetric convex surface of the worked lens is aspheric.

Quasi bi-prism lenses manufactured can be aesthetically pleasing due to the absence of the visible dividing line between the first optical zone and the second optical zone. Furthermore, the lens design that provides the prescribed spherical, cylindrical and prism powers can be obtained using software methods and reproduced on one or more surfaces of a lens blank with available freeform manufacturing equipment. Since freeform manufacturing can be used with a variety of materials, quasi bi-prism lenses can be manufactured using a material that is most suitable to a patient's needs. Using, freeform manufacturing technology, the first optical zone and the second optical zone are smoothly connected together without a surface discontinuity, the quasi bi-prism lens can be easily tinted and coated. Accordingly, photochromic layers or films, polarization layers or films can be integrated with the quasi bi-prism lenses in sun glasses.

### Example Embodiments of a Quasi Bi-Prism Lens

As discussed above, quasi bi-prism lenses can include a first optical zone disposed in the upper portion of a surface (e.g., forward or rearward) of the lens, a second optical zone disposed in the lower portion of the same surface and a transition zone connecting the first and second optical zone. The first and/or second optical zone can include a prismatic section that can provide prismatic power. The prism in the prismatic section of the first and/or second optical zone can be aligned along a horizontal axis, a vertical axis or a skew axis that is neither horizontal nor vertical. This disclosure contemplates that the first optical zone, the second optical zone and the transition zone are disposed on the rearward surface of the lens. In such implementations, the rearward surface of the lens can be a concave surface and the forward surface can be a rotationally symmetric convex surface. As discussed above, the rotationally symmetric convex surface can be either a spherical surface with constant radius of curvature or an aspheric. The clean first optical zone and the clean second optical zone can have a varying radius of curvature so as to reduce residual cylinder and distortions. The body of the lens can comprise a variety of optical materials including but not limited to CR-39, Trivex, 1.56, SuperLite 1.60, SuperLite 1.67, Polycarbonate, and SuperLite 1.74. Other optical materials can also be used. The body of the lens can be subject to a variety of pre-treatments including but not limited to Clear^{™}, Transitions^{™} VI and VII (Gray, Brown), Transitions XtrActive^{™}, Transitions Vantage^{™}, Polarized (Gray, Brown) and Drivewear^{™}. The lens body can comprise tints or coating (e.g., hard anti-scratch coating, anti-reflection coating, etc.).

The first optical zone is configured to provide far or distance vision, such as, for example, at distances beyond about 6.1 m (20 feet). In various embodiments, the first optical zone can be configured to provide intermediate distance vision, such as, for example, at distances between about 0.61 m (2 feet) and about 6.1 m (20 feet). The first optical zone can have a spherical power range between about -20 Diopter and about 20 Diopter to correct for refractive errors in a patient's eye. In addition, the first optical zone can have a cylinder power in the range between about -10 Diopter to about 0 Diopter or 0 Diopter to about +10 Diopter to correct for astigmatic errors in the patient's eye. The first optical zone includes an area having a residual cylinder power or aberrations less than 0.25 Diopter, less than or equal to about 0.12 Diopter, less than or equal to about 0.06 Diopter and/or less than or equal to about 0.03 Diopter. The first optical zone can also include a prismatic section that can provide prismatic power in the range of 0 to 5 prism Diopter. For example, the first optical zone can provide prism power between 0.25 prism Diopter to 1.0, between about 0.5 prism Diopter to 2.0 prism Diopters, 1 to 5 prism Diopter, 1.5 to 4.5 prism Diopter, 2.0 to 4.0 prism Diopter, 2.5 to 3.5 prism Diopter or there between. The prism in the prismatic section can be oriented along a horizontal axis in a base in or base out configuration. The prism in the prismatic section can be oriented along a vertical axis in a base up or base down configuration. The prism in the prismatic section can also be oriented along a skew axis that is neither horizontal nor vertical.

The width of the first optical zone can vary between about 30 mm to about 70 mm depending on the surface area of the lens body, the width and height of the frame selected by the patient and the patient's facial structure and other physical characteristics. In various embodiments, the width of the first optical zone can be greater than or equal to 50 mm, greater than or equal to 40 mm or greater than or equal to 30 mm. In various embodiments, the width of the first optical zone can include the full width of the lens. The first optical zone can lie between about 6 degrees below the fitting point to about 30 degrees above the fitting point. For example, in various embodiments, the height of the first optical zone can be between about 3 degrees above the fitting point and about 20 degrees above the fitting point. As another example, in various embodiments, the height of the first optical zone can be between about 2 degrees below the fitting point and about 25 degrees above the fitting point. In various embodiments, the bottom (or lower portion) of the first optical zone can be located below the fitting point. For example, the bottom (or lower portion) of the first optical zone can extend up to about 6 mm below the fitting point. For example, the bottom (or lower portion) of the first optical zone can be located between about 1 mm and about 6 mm below the fitting point, between about 2 mm and about 5 mm below the fitting point, between about 3 mm and about 4 mm below the fitting point, between about 2 mm to about 3 mm below the fitting point, or there between.

The second optical zone is configured to provide near vision, such as, for example, at distances of about 40.64 cm (16 inches). In various embodiments, the second optical zone can be configured to provide intermediate distance vision, such as, for example, at distances between about 0.61 m (2 feet) and about 6.1 m (20 feet). In various embodiments, the second optical zone can be disposed nasally on the surface of the lens. The second optical zone can have a variety of shapes such as, for example, circular, elliptical, D shape (with or without rounded edges), etc. The second optical zone can have an additional spherical power in the range between greater than 0 or .25 Diopter to about 4 Diopter relative to the spherical power provided by the first optical zone. The second optical zone can also include an area having a residual cylinder power or aberrations less than or equal to about 0.25 Diopter, less than or equal to about 0.12 Diopter, less than or equal to about 0.06 Diopter and/or less than or equal to about 0.03 Diopter. For example, the entire second optical zone or a part thereof can have a residual cylinder power or aberrations less than or equal to about 0.25 Diopter, less than or equal to about 0.12 Diopter, less than or equal to about 0.06 Diopter and/or less than or equal to about 0.03 Diopter. The second optical zone can also include a prismatic section and can provide prismatic power in the range of 0 to 5 prism Diopter. For example, the second optical zone can provide prism power between 0.25 prism Diopter to 1.0, between about 0.5 prism Diopter to 2.0 prism Diopters, 1 to 5 prism Diopter, 1.5 to 4.5 prism Diopter, 2.0 to 4.0 prism Diopter, 2.5 to 3.5 prism Diopter or there between. In various implementations, the second optical zone can provide prismatic power greater than 5.0 prism Diopters. The prism in the prismatic section can be oriented along a horizontal axis in a base in or base out configuration. The prism in the prismatic section can be oriented along a vertical axis in a base up or base down configuration. The prism in the prismatic section can also be oriented along a skew axis that is neither completely horizontal nor vertical. The prismatic section can be disposed below the fitting point along the line of convergence.

The width of the second optical zone can vary between 12 mm to about 24 mm. In various embodiments, a nominal prism addition power of about 0.2 prism Diopter, 0.4 prism Diopter, 0.6 prism Diopter, 0.8 prism Diopter, 1.0 prism Diopter, 1.5 prism Diopter, 2.0 prism Diopter, 3.0 prism Diopter, 4.0 prism Diopter or 5.0 prism Diopter is reached at a distance between about 4 mm and about 20 mm below the fitting point. For example, a nominal prism addition power between about 0.2 - 5 prism Diopter can be reached at a distance of about 10 mm below the fitting point. In various embodiments of quasi bi-prism lenses a portion of the prismatic section having the maximum prism power can be along the convergence path. The transition zone connecting the first and second optical zones can have a width between about 5 mm to about 50 mm. For example, a width of the transition zone can be greater than or equal to 5 mm and less than or equal to 50 mm, greater than or equal to 8 mm and less than or equal to 40 mm, greater than or equal to 12 mm and less than or equal to 30 mm, greater than or equal to 10 mm and less than or equal to 25 mm, greater than or equal to 15 mm and less than or equal to 25 mm, or have values there between.

The transition zone connecting the first and second optical zones can have a length between 4 mm to 8 mm or have values there between. In various implementations, the length of the transition zone can be between about 6 mm and about 8 mm. As long as it includes an area having a residual cylinder power or aberrations less than or equal to 0.5 Diopter according to the invention, the transition zone can have a maximum residual cylinder power that is greater than or equal to twice the magnitude of the prism power of the second optical zone. For example, the transition zone can have a maximum residual cylinder power that is greater than or equal to thrice or four times the magnitude of the prism power of the second optical zone. The transition zone can have a maximum residual cylinder power that is greater than or equal to 3 Diopters, greater than or equal to 4 Diopters, greater than or equal to 5 Diopters, greater than or equal to 8 Diopters, greater than or equal to 12 Diopters, greater than or equal to 15 Diopters and less than or equal to 20 Diopters. The transition zone can also have a large prism power gradient across the length of the transition zone such that a patient is not able to comfortably view through the transition zone. The maximum residual cylinder powers in the transition zone can be along the convergence path. The transition zone is configured to smoothly connect the first optical zone and the second optical zone such that there is no surface discontinuity or a visible demarcation between the first and the second optical zones.

The lenses described herein (quasi bi-prism or quasi progressive) can be designed using information from a patient's prescription as measured by an optometrist, ECP, ophthalmologist, or eye specialist. The information from the patient's prescription can include sphere and cylinder power that can correct refractive and astigmatic errors in distance vision, sphere and cylinder power that can correct refractive and astigmatic errors in near vision, add power if required, prism power correction, additional prism power correction and pupillary distance (PD) when the patient is viewing a distant object.

The lens design can also be based on other lens parameters measured by an optometrist, ECP, ophthalmologist, or eye specialist, or can be calculated automatically or semi-automatically using image processing and/or computer vision techniques. The lens design can also be based on measurements based on frame parameters such as frame type, the fitting height measured from the center of the pupil to the lower rim of the frame, frame width, frame height, and DBL, or trace data can also be obtained. In various implementations, the fitting height can be between 10 mm to 30 mm. For example, the fitting height can be 15 mm or 18 mm. The lens design can be reproduced on one or more surfaces of a lens blank using freeform technology.

For example, the shape of the rearward and/or forward surfaces of the lens can be determined based on a prescription obtained from an eye care professional. The prescription can include the optical powers (e.g., spherical and cylinder power) that provide distance or intermediate distance vision correction, prism correction at the far zone and at the near zone, additional prism correction in the near zone when the far zone does not include prism and orientation of the prism angle. The prescription can further include additional power that may be needed for near vision, mono far pupillary distance (PD), fitting height (FH) (measured from the center of the pupil to the lower rim of the frame), frame width, frame height, and DBL (Distance Between Lens), or trace data, or any combination thereof. The prescription can also include the frame type. The shape of the rear surface and/or front surface of the lens can be determined using a computer implemented method and includes determining a shape and/or size of the clean far/intermediate zone, a shape and/or size of the clean near vision/intermediate zone, shape and/or length and width of the transition region or corridor and characteristics of the prismatic segment to be included in the far/near zones. The computer implemented method may be configured to optimize the shapes and/or sizes of the various regions of the lens (e.g., far, near, transition region) such that the resulting lens provides the prescribed prescription power with reduced aberrations. The computer implemented method may be configured to determine a length and width of the transition region such that the resulting lens is a quasi bi-prism lens having the characteristics discussed herein. The determined shape of the lens can be used to shape one or more surfaces of a lens blank using freeform manufacturing technology.

### Multi-Segment Lens

US patent no. 6,786,600, Katzman & Carmon presents a method for generating a progressive surface including generating the surface from stored delta data and a substantially spherical or toric surface calculated on-the-fly. The delta data is the remainder surface after subtracting from a calculated surface a spherical or toric surface according to the prescription sphere power and cylindrical power. One can apply the same method and producing delta data of blended bifocal, quasi bifocal and quasi bi-prism lenses. As long as the optical regions and the distorted regions (regions with cylindrical aberrations) of the deltas do not overlap, the deltas can be summed; one can add multiple deltas to each other and get a whole new spectrum for multi segment lenses in different positions on the lens. This method allows a combination of several additional power segments and additional prism power segments in different positions of the lens. It also allows adding additional power and additional prism power segments to a progressive lens (using the progressive lens delta data). At the optical regions the sum of the optical properties of all the deltas is obtained, while in the distorted regions an aberration interference which depends on the vector sum of the cylindrical aberration is obtained. This type of lenses can be useful for people who need to gaze to mid-range and reading distances in uncommon gazing positions such as up or aside, e.g. pilots, electricians, mechanics, or carpenters. Figure 13A illustrates an implementation of a quasi bifocal lens. Figure 13B illustrates an implementation of a quasi bifocal lens with a small segment. Figure 13C illustrates an implementation of a quasi bi-prism lens. Figure 13D illustrates an implementation of a multi segment lens including a small segment on a single vision lens. Figure 13E illustrates an implementation of a multi segment lens including a small segment on a quasi-bifocal lens. Figure 13F illustrates an implementation of a multi segment lens including a small segment on a quasi-bifocal lens with additional bi-prism near segment.

In particular, Figures 13D - 13F present three examples of multi segment lenses which are a combination of the three building blocks lens deltas illustrated in Figures 13A - 13C. The delta building blocks are quasi bifocal (Fig. 13A), quasi bifocal with small segment (Fig. 13B), and quasi bi-prism (Fig. 13C). The three multi segment lenses are top-left small segment on a single vision lens (Fig. 13D), top-left small segment on a quasi-bifocal lens (Fig. 13E), and top-left small segment on a quasi-bifocal lens with additional bi-prism near segment (Fig. 13F). The lenses illustrated in Figures 13D - 13F only show some of the possible locations of the segments. In other implementations, the segments can be located elsewhere. For example, the segments can be disposed at an upper right location of the lens, a central location of the lens, a lower left or right location of the lens. Accordingly, the segments can be located at any gazing position along the surface of the lens.

Various implementations can include single segment lenses. A single segment lens provides a single vision lens with additional segment at any chosen gazing position on the lens. The segment can be: a single segment with additional optical power; a single segment with additional prism power; or a single segment with both additional optical power and additional prism power.

Various implementations can include bi-segment lenses. A bi-segment lens includes a bifocal or a trifocal lens (e.g., quasi bifocal, blended bifocal, or flat top bifocal), with additional segment at any chosen gazing position on the lens. The segment can be: a single segment with additional optical power; a single segment with additional prism power; or a single segment with both additional optical power and additional prism power.

Various implementations can include progressive-segment lens. A progressive-segment lens includes a progressive lens (e.g., a quasi progressive lens) with additional segment at any chosen gazing position on the lens. The segment can be: a single segment with additional optical power; a single segment with additional prism power; a single segment with both additional optical power and additional prism power; or a single segment on the near vision segment of the progressive lens with additional optical power, prism power, or both.

Various implementations can include a multiplicity of segment lens. For example, the lenses can include a single vision, bifocal or trifocal (quasi, blended, or flat top), or progressive lens with two or more additional segments at any chosen gazing position on the lens. Each one of the segments can be a segment with additional optical power; a segment with additional prism power; or a segment with both additional optical power and additional prism power. In case of progressive lens, one of the segments can be placed on the near vision segment of the progressive lens with additional optical power, prism power, or both.

Accordingly, the multi-segment lenses described herein can have any combination of quasi bi-prism, quasi-progressive, quasi bifocal or progressive lenses with one or more segments located at any gazing position of the lens.

All the above lenses (single vision, bifocal, trifocal, or progressive) can be with or without sphere power prescription, with or without toric prescription, with or without addition, with or without prescribed prism.

The above presents a description of systems, devices, article of manufacture and methods contemplated for carrying out the concepts disclosed herein, and of the manner and process of making and using it, in such full, clear, concise, and exact terms as to enable any person skilled in the art to which it pertains to make and use this invention. The devices, article of manufacture and methods disclosed herein, however, are susceptible to modifications and alternate constructions from that discussed above which are within the scope of the present disclosure. Consequently, it is not the intention to limit this disclosure to the particular embodiments disclosed. On the contrary, the intention is to cover modifications and alternate constructions coming within the spirit and scope of the disclosure as generally expressed by the following claims, which particularly point out and distinctly claim the subject matter of embodiments disclosed herein.

Although embodiments have been described and pictured in an exemplary form with a certain degree of particularity, it should be understood that the present disclosure has been made by way of example, and that numerous changes in the details of construction and combination and arrangement of parts and steps may be made without departing from the scope of the claims.

## Claims

1. An ophthalmic lens comprising:
a far optical zone (101) capable of providing far vision, a horizontal width of the far optical zone measured across the widest portion of the far optical zone being between 30 mm and 70 mm, the far zone having a residual cylinder power less than 0.25 Diopter;
a near optical zone (103) capable of providing near vision wherein the near optical zone has a centroid of the area in the near optical zone in which an addition power is not less than a maximum addition power minus 0.25 Diopter and wherein a horizontal width through the centroid of the near optical zone where the addition power is not less than the maximum addition value minus 0.25 Diopter is between 12 mm and 24 mm; and
a corridor (113) connecting the far optical zone and the near optical zone, the corridor including an area having a residual cylinder power or aberrations less than or equal to 0.5 Diopter,
two peripheral zones (109a, 109b) disposed on either side of the corridor,
wherein a length of the corridor measured between a first point proximal to the far optical zone and a second point proximal to the near optical zone is between 4 mm and 8 mm, wherein the first point has an addition power of 0.1 Diopter, and wherein the second point has an addition power equal to a maximum addition power minus 0.1 Diopter,
wherein the peripheral zones have a residual cylinder power that is greater than 2.0 Diopter.

2. The ophthalmic lens of Claim 1, wherein the corridor has a power gradient extending from the far optical zone to the near optical zone with lower power closer to the far optical zone and higher power closer to the near optical zone.

3. The ophthalmic lens of Claim 1, wherein the near optical zone provides an addition power between 0.75 Diopter and 4.0 Diopter.

4. The ophthalmic lens of Claim 1, wherein the near and far optical zones and said corridor are provided on a back surface of said lens.

5. The ophthalmic lens of Claim 1, wherein the near and far optical zones and said corridor are provided on a front surface of said lens.

6. The ophthalmic lens of Claim 1, comprising a freeform lens having back or front surfaces comprising a freeform surface.

7. The ophthalmic lens of Claim 1, wherein the length of the corridor is 4 mm.

8. The ophthalmic lens of Claim 1, wherein a width of the corridor measured between a left most point of a temporal peripheral zone having a residual cylinder power or aberration threshold of 1.0 Diopter and a right most point of a nasal peripheral zone having a residual cylinder power or aberration threshold of 1.0 Diopter is between 3 mm to 8 mm.

9. The ophthalmic lens of Claim 1 having an addition of between 0.75 and 1.5 D, said peripheral zones having between 1.5 and 5 D residual cylinder.

10. The ophthalmic lens of Claim 1 having an addition of between 1.75 and 2.5 D, said peripheral zones having between 2.5 and 8 D residual cylinder.

11. The ophthalmic lens of Claim 1 having an addition of between 2.75 and 4 D, said peripheral zones having between 4 and 12 D residual cylinder.

12. The ophthalmic lens of Claim 1, wherein the peripheral zones have a residual cylinder power that is greater than 2.5 Diopter.

13. The ophthalmic lens of Claim 1, wherein the peripheral zones have a residual cylinder power that is greater than 3.0 Diopter

14. The ophthalmic lens of Claim 1, wherein the peripheral zones have a residual cylinder power that is greater than 4.0 Diopter.

## Patentansprüche

1. Ophthalmische Linse, umfassend:
eine optische Fernzone (101) für das Vorsehen einer Fernsicht, wobei die horizontale Breite der optischen Fernzone, gemessen am breitesten Teil der optischen Fernzone, zwischen 30 mm und 70 mm beträgt, wobei die Fernzone eine Restzylinderkraft von weniger als 0,25 Diopter aufweist,
eine optische Nahzone (103) für das Vorsehen einer Nahsicht, wobei die optische Nahzone einen Flächenschwerpunkt in der Nähe der optischen Nahzone aufweist, in dem eine Additionskraft nicht kleiner als eine maximale Additionskraft minus 0,25 Diopter ist und wobei die horizontale Breite durch den Schwerpunkt der optischen Nahzone dort, wo die Additionskraft nicht kleiner als der maximale Additionswert minus 0,25 Diopter ist, zwischen 12 mm und 24 mm beträgt, und
einen Korridor (113), der die optische Nahzone und die optische Fernzone verbindet, wobei der Korridor einen Bereich mit einer Restzylinderkraft oder mit Aberrationen kleiner oder gleich 0,5 Diopter umfasst, wobei zwei periphere Zonen (109a, 109b) auf beiden Seiten des Korridors angeordnet sind,
wobei die Länge des Korridors, gemessen zwischen einem ersten Punkt nahe der optischen Fernzone und einem zweiten Punkt nahe der optischen Nahzone zwischen 4 mm und 8 mm beträgt, wobei der erste Punkt eine Additionskraft von 0,1 Diopter aufweist und wobei der zweite Punkt eine Additionskraft gleich einer maximalen Additionskraft minus 0,1 Diopter aufweist,
wobei die peripheren Zonen eine Restzylinderkraft größer als 2,0 Diopter aufweisen.

2. Ophthalmische Linse nach Anspruch 1, wobei der Korridor einen Kraftgradienten aufweist, der sich von der optischen Fernzone zu der optischen Nahzone erstreckt, wobei die niedrigere Kraft näher an der optischen Fernzone liegt und die höhere Kraft näher an der optischen Nahzone liegt.

3. Ophthalmische Linse nach Anspruch 1, wobei die optische Nahzone eine Additionskraft zwischen 0,75 Diopter und 4,0 Diopter vorsieht.

4. Ophthalmische Linse nach Anspruch 1, wobei die optischen Nah- und Fernzonen und der Korridor auf einer Rückfläche der Linse vorgesehen sind.

5. Ophthalmische Linse nach Anspruch 1, wobei die optischen Nah- und Fernzonen und der Korridor auf einer Vorderfläche der Linse vorgesehen sind.

6. Ophthalmische Linse nach Anspruch 1, die eine Freiformlinse ist, deren vordere und hintere Flächen Freiformflächen sind.

7. Ophthalmische Linse nach Anspruch 1, wobei die Länge des Korridors 4 mm beträgt.

8. Ophthalmische Linse nach Anspruch 1, wobei die Breite des Korridors, gemessen zwischen einem am weitesten links gelegenen Punkt einer temporalen peripheren Zone mit einem Restzylinderkraft- oder Aberrationsschwellenwert von 1,0 Diopter und einem am weitesten rechts gelegenen Punkt einer nasalen peripheren Zone mit einem Restzylinderkraft- oder Aberrationsschwellenwert von 1,0 Diopter zwischen 3 mm und 8 mm beträgt.

9. Ophthalmische Linse nach Anspruch 1, die eine Addition zwischen 0,75 und 1,5 D aufweist, wobei die peripheren Zonen einen Restzylinder zwischen 1,5 und 5 D aufweisen.

10. Ophthalmische Linse nach Anspruch 1, die eine Addition zwischen 1,75 und 2,5 D aufweist, wobei die peripheren Zonen einen Restzylinder zwischen 2,5 und 8 D aufweisen.

11. Ophthalmische Linse nach Anspruch 1, die eine Addition zwischen 2,75 und 4 D aufweist, wobei die peripheren Zonen einen Restzylinder zwischen 4 und 12 D aufweisen.

12. Ophthalmische Linse nach Anspruch 1, wobei die peripheren Zonen eine Restzylinderkraft größer als 2,5 Diopter aufweisen.

13. Ophthalmische Linse nach Anspruch 1, wobei die peripheren Zonen eine Restzylinderkraft größer als 3,0 Diopter aufweisen.

14. Ophthalmische Linse nach Anspruch 1, wobei die peripheren Zonen eine Restzylinderkraft größer als 4,0 Diopter aufweisen.

## Revendications

1. Verre ophtalmique comprenant :
une zone optique éloignée (101) capable de fournir une vision de loin, une largeur horizontale de la zone optique éloignée mesurée sur la partie la plus large de la zone optique éloignée est comprise entre 30 mm et 70 mm, la zone éloignée ayant une puissance cylindrique résiduelle inférieure à 0,25 dioptrie ;
une zone optique proche (103) capable de fournir une vision de près, dans lequel la zone optique proche a un centroïde de la zone optique proche dans laquelle une puissance d'addition n'est pas inférieure à une puissance d'addition maximale moins 0,25 dioptrie et
dans lequel une largeur horizontale passant par le centroïde de la zone optique proche où la puissance d'addition n'est pas inférieure à la valeur d'addition maximale moins 0,25 dioptrie est comprise entre 12 mm et 24 mm ; et
un couloir (113) reliant la zone optique éloignée et la zone optique proche, le couloir comprenant une zone ayant une puissance cylindrique résiduelle ou des aberrations inférieures ou égales à 0,5 dioptrie, deux zones périphériques (109a, 109b) disposées de part et d'autre du couloir,
dans lequel une longueur du couloir mesurée entre un premier point proximal de la zone optique éloignée et un second point proximal de la zone optique proche est comprise entre 4 mm et 8 mm, dans lequel le premier point a une puissance d'addition de 0,1 dioptrie, et dans lequel le second point a une puissance d'addition égale à une puissance d'addition maximale moins 0,1 dioptrie,
dans lequel les zones périphériques ont une puissance cylindrique résiduelle qui est supérieure à 2,0 dioptries.

2. Verre ophtalmique de la revendication 1, dans lequel le couloir présente un gradient de puissance s'étendant de la zone optique éloignée à la zone optique proche, avec une puissance plus faible plus près de la zone optique éloignée et une puissance plus élevée plus près de la zone optique proche.

3. Verre ophtalmique de la revendication 1, dans lequel la zone optique proche fournit une puissance supplémentaire comprise entre 0,75 dioptrie et 4,0 dioptries.

4. Verre ophtalmique de la revendication 1, dans lequel les zones optiques proches et éloignées et ledit couloir sont fournis sur une surface arrière dudit verre.

5. Verre ophtalmique de la revendication 1, dans lequel les zones optiques proches et éloignées et ledit couloir sont situés sur une surface avant dudit verre.

6. Verre ophtalmique de la revendication 1, comprenant un verre de forme libre dont les surfaces arrière ou avant comprennent une surface de forme libre.

7. Verre ophtalmique de la revendication 1, dans lequel la longueur du couloir est de 4 mm.

8. Verre ophtalmique de la revendication 1, dans lequel une largeur du couloir mesurée entre le point le plus à gauche d'une zone périphérique temporale ayant une puissance cylindrique résiduelle ou un seuil d'aberration de 1,0 dioptrie et un point le plus à droite d'une zone périphérique nasale ayant une puissance cylindrique résiduelle ou un seuil d'aberration de 1,0 dioptrie est comprise entre 3 mm et 8 mm.

9. Verre ophtalmique de la revendication 1 ayant une addition comprise entre 0,75 et 1,5 D, lesdites zones périphériques ayant un cylindre résiduel compris entre 1,5 et 5 D.

10. Verre ophtalmique de la revendication 1 avec une addition comprise entre 1,75 et 2,5 D, lesdites zones périphériques ayant un cylindre résiduel compris entre 2,5 et 8 D.

11. Verre ophtalmique de la revendication 1 avec une addition comprise entre 2,75 et 4 D, lesdites zones périphériques ayant un cylindre résiduel compris entre 4 et 12 D.

12. Verre ophtalmique de la revendication 1, dans lequel les zones périphériques ont une puissance cylindrique résiduelle supérieure à 2,5 dioptries.

13. Verre ophtalmique de la revendication 1, dans lequel les zones périphériques ont une puissance cylindrique résiduelle supérieure à 3,0 dioptries.

14. Verre ophtalmique de la revendication 1, dans lequel les zones périphériques ont une puissance cylindrique résiduelle supérieure à 4,0 dioptries.
